# EUROPÄISCHE PATENTSCHRIFT

(11) **EP 2 773 556 B1**
(45) Veröffentlichungstag und Bekanntmachung des Hinweises auf die Patenterteilung: **18.07.2018**
(21) Anmeldenummer: 12805568.8
(22) Anmeldetag: 20.10.2012
(51) Int. Cl.: B64C 3/30, B64C 39/02

(54) **HÖHENLUFTFAHRZEUG, LUFTFAHRZEUGVERBAND UND VERFAHREN ZUM BETREIBEN EINES LUFTFAHRZEUGVERBANDS**
HIGH ALTITUDE AIRCRAFT, AIRCRAFT UNIT AND METHOD FOR OPERATING AN AIRCRAFT UNIT
AÉRONEF DE HAUTE ALTITUDE, ENSEMBLE D'AÉRONEFS, ET PROCÉDÉ POUR FAIRE FONCTIONNER UN ENSEMBLE D'AÉRONEFS

(30) Priorität: 25.10.2011 DE 102011116841
(43) Veröffentlichungstag der Anmeldung: 10.09.2014
(73) Patentinhaber: Airbus Defence and Space GmbH, 85521 Ottobrunn (DE)
(72) Erfinder: HIEBL, Manfred, 86633 Neuburg a.d. Donau (DE); PONGRATZ, Hans Wolfgang, 82024 Taufkirchen (DE)
(74) Vertreter: Isarpatent
(86) Internationale Anmeldenummer: PCT/DE2012/001021
(87) Internationale Veröffentlichungsnummer: WO 2013/060318

(56) Entgegenhaltungen:
- EP-A2- 1 600 370
- DE-A1-102008 022 452
- US-A- 4 415 133
- US-A- 5 810 284
- US-A1- 2009 026 316
- US-A1- 2009 292 407
- US-B1- 7 900 877
- GLEN BROWN ET AL: "INFLATABLE STRUCTURES FOR DEPLOYABLE WINGS", AIAA JOURNAL, , Bd. A01-29254, Nr. AIAA-2001-2068 1. Januar 2001 (2001-01-01), Seiten 19-26, XP007921587, ISSN: 0001-1452 Gefunden im Internet: URL:http://www.humanpoweredhelicopters.com /articles/aiaa-01-2068_inflatable.pdf [gefunden am 2013-03-04]
- NORRIS R ET AL: "Historical Perspective on Inflatable Wing Structures", 50TH AIAA/ASME/ASCE/AHS/ASC STRUCTURES, STRUCTURAL DYNAMICS, AND MATERIALS CONFERENCE 17TH 4 - 7 MAY 2009, PALM SPRINGS, CALIFORNIA, AIAA, US, 4. Mai 2009 (2009-05-04), Seiten 1-10, XP007908504,
- BROWN F: "Eternal Airplane - A solar electric wing takes off", POPULAR SCIENCE, TIMES MIRROR MAGAZINES. NEW YORK, US, 1. April 1994 (1994-04-01), Seiten 70-75,100, XP002188147, ISSN: 0161-7370
- HARMATS M ET AL: "HYBRID-PROPULSION HIGH-ALTITUDE LONG-ENDURANCE REMOTELY PILOTED VEHICLE", JOURNAL OF AIRCRAFT, AIAA, RESTON, VA, US, Bd. 36, Nr. 2, 1. März 1999 (1999-03-01), Seiten 321-331, XP000804442, ISSN: 0021-8669

## Beschreibung

### TECHNISCHES GEBIET

Die vorliegende Erfindung betrifft ein unbemanntes Höhenluftfahrzeug, insbesondere Stratosphären-Luftfahrzeug, mit zumindest einem Rumpf, Tragflügeln, Steuerflächen und zumindest einer Antriebseinrichtung, die zumindest eine Antriebsmaschine und zumindest einen Propeller aufweist. Insbesondere betrifft die Erfindung ein schnellfliegendes unbemanntes Höhenluftfahrzeug mit eigenem Solarantrieb und zusätzlicher Treibstoffzufuhr durch Luft zu Luft Betankung mit Wasserstoffgas von einem solarbetriebenen, niedriger fliegenden Tankflugzeug aus, das Wasserstoffgas mit Solarenergie durch Elektrolyse von mitgeführtem Wasser herstellt.
Des Weiteren betrifft die vorliegende Erfindung einen Luftfahrzeugverband aus zumindest einem ersten unbemannten Höhenluftfahrzeug und zumindest einem zweiten unbemannten Höhenluftfahrzeug, wobei das zweite unbemannte Höhenluftfahrzeug ein Betankungsluftfahrzeug für das erste unbemannte Höhenluftfahrzeug bildet.
Schließlich betrifft die vorliegende Erfindung auch ein Verfahren zum Betreiben eines derartigen Luftfahrzeugverbandes.

### HINTERGRUND DER ERFINDUNG

Eine wesentliche Aufgabe zum Schutz eines Territoriums vor feindlichen Angriffen besteht heutzutage darin, dieses Territorium anfliegende Flugkörper, beispielsweise Raketen, so frühzeitig zu entdecken, dass eine wirksame Bekämpfung dieser Flugkörper möglich ist. Eine derartige Luftraumüberwachung mittels Satelliten durchzuführen ist sehr teuer und aufwendig. Eine in großer Höhe, zum Beispiel in der Stratosphäre in bis zu 38 km Höhe, positionierte Beobachtungsplattform könnte daher eine Alternative zu Satelliten darstellen.

Auch für andere Aufgaben, die üblicherweise von Satelliten wahrgenommen werden, könnten Stratosphären-Plattformen in Höhen über 20 km eingesetzt werden, in denen es keine Jetstreams mit Geschwindigkeiten über 60 m/sec, und keine Wolken mit starken Turbulenzen mehr gibt. Derartige Stratosphären-Plattformen müssen rund um die Uhr einsatzbereit sein, was bedeutet, dass sie einen möglichst geringen Energieverbrauch aufweisen müssen und mit autonomen Energiequellen ausgestattet sein müssen. Dennoch wird sich eine vollständige Energieautonomie nicht realisieren lassen, so dass einem derartigen Höhenluftfahrzeug auch Energie von außen zugeführt werden muss, was beispielsweise durch Tankflugzeuge erfolgen kann.

Die zugehörigen Tankflugzeuge werden normalerweise mit geringem Eigenenergieverbrauch und mit effizienter Solarenergiegewinnung und Speicherung über den Wolken fliegen und Jetstreams Turbulenzgebieten horizontal oder vertikal aus dem Wege gehen.

So können die Höhenluftfahrzeuge zum Beispiel als Relaisstation für drahtlose Signalübertragung eingesetzt werden um Nachrichtensatelliten zu ersetzen, oder sie durch zusätzliche Breitbanddatenverbindungen zu ergänzen, die nicht der starken Dämpfung durch Wolken und Regen ausgesetzt sind und damit mit geringerer Energie größere Strecken überbrücken können. Weiterhin können Radargeräte aus großer Höhe weiter bis zum Horizont sehen und besonders bei schlechtem Wetter wesentlich größere Reichweiten erzielen, weil der Radarstrahl nur mehr den kleineren Teil der Strecke durch Regen oder Wolken zurücklegen muss.

Aufgaben der Luftüberwachung können durch permanenten Flug in großer Höhe gelöst werden und können daher durch ein spezielles, leicht gebautes Höhenflugzeug gelöst werden, das nicht den starken Winden und gegebenenfalls Starkregen in niedrigeren Höhen standhalten muss.

### STAND DER TECHNIK

Es sind aus dem allgemeinen Stand der Technik unbemannte Fluggeräte auf Ballonbasis bekannt, die vergleichbare Flughöhen erreichen können und niedrige Betriebskosten aufweisen. Diese Ballon-Fluggeräte sind aber nicht im erforderlichen Maße sowohl bezüglich der Höhe, als auch bezüglich der Horizontalen manövrierbar und können daher beispielsweise eine vorgegebene Position nicht gegen die dort herrschenden Höhenwinde einhalten. Insbesondere der in großen Höhen vorherrschende Jetstream, dessen Verlauf nicht konstant ist, erfordert eine geeignete Manövrierbarkeit eines Höhenluftfahrzeugs, damit dieses außerhalb oder am Rand des Jetstreams zum Beispiel so positioniert werden kann, dass es in Bezug auf einen Ort auf der Erdoberfläche nahezu stationär ist. Bekannte Ballone können nennenswerte Strecken nur zurücklegen, wenn sie sich vom Jetstream treiben lassen.

Des Weiteren sind konventionelle Flugzeuge bekannt, die zwar die geforderte Manövrierfähigkeit besitzen, die aber nur eine begrenzte Flugdauer ermöglichen und dabei sehr hohe Betriebskosten verursachen.

Auf experimenteller Basis wurden in den Jahren 1995 bis 2005 solarbetriebene Höhenflugzeuge entwickelt mit Energiegewinnung durch Solarzellen auf allen geeigneten Oberflächen, und mit Energiespeicherung durch einen Zyklus von Wasserelektrolysegerät zur Aufspaltung von Wasser in Wasserstoffgas und Sauerstoffgas, Speicherung der Wasserstoff und Sauerstoffgase in Hochdruckspeichem (bis 700 bar), und Wiedergewinnung der elektrischen Energie in Wasserstoff-Sauerstoff-Brennstoffzellen.

Die realisierten Fluggeräte waren der Pathfinder und der Helios der NASA, die beide erfolgreich flugerprobt wurden bis 30 km Flughöhe und der HeliPlat, ein Projekt und ein Prototyp der europäischen Weltraumagentur ESA, der 21 km Flughöhe erreichen soll.

Bei diesen Fluggeräten wurde eine Energiespeicherdichte von 400 Wh pro kg Eigengewicht erzielt. Die Flügel der Fluggeräte wiesen eine extreme Streckung von bis zu 30 und einen sehr weichen Fügel mit großer Durchbiegung auf, die die Fluggeräte sehr empfindlich gegen Böen machte. Das Fluggerät Helios ging infolge einer Böe nach einer extremen Flügeldurchbiegung durch Flügelbruch verloren. Die erzielte Energiespeicherdichte bei diesen Fluggeräten ist wesentlich höher als der Wert von 200 Wh pro kg der mit Lithium-Ionen-Batterien erreicht werden kann. Diese werden in dem bemannten Solarflugzeug "Solar Impulse" verwendet, das aber nur Höhen von 10 km erreicht. Ein Stand der Technik ist durch das Dokument "INFLATABLE STRUCTURES FOR DEPLOYABLE WINGS", AIAA Journal, 2001-2068, Glen Brown, Roy Haggard and Brook Norton. Ein weiterer wesentlicher Stand der Technik ist durch US5810284 gegeben.

### DARSTELLUNG DER ERFINDUNG

Aufgabe der vorliegenden Erfindung ist es daher, ein unbemanntes Höhenluftfahrzeug bereitzustellen, welches in der oberen Stratosphäre bis zu einer Höhe von etwa 38 km mit nahezu unbegrenzter Flugdauer fliegen kann, und entweder stationär entgegen der gerade vorherrschenden Höhenwinde über Grund positioniert werden kann, oder bei Bedarf große Strecken, z.B. 3000 km, mit ausreichender Geschwindigkeit von z.B. 250 km/h zurücklegen kann. Ein derartiges Höhenluftfahrzeug soll in der Lage sein, eine entsprechende Nutzlastausrüstung sowie eine Antriebs-, Flugregelungs- und Kommunikationsausrüstung sowie die dafür erforderliche Energieversorgung zu tragen und diese zu betreiben. Eine weitere Aufgabe besteht darin, einen Luftfahrzeugverband aus erfindungsgemäßen Höhenluftfahrzeugen anzugeben, von denen zumindest eines ein Betankungsflugzeug bildet. Schließlich besteht noch eine Aufgabe darin, ein Verfahren zum Betreiben eines derartigen Luftfahrzeugverbandes anzugeben.
Die auf das Höhenluftfahrzeug gerichtete Aufgabe wird gelöst durch das im Patentanspruch 1 angegebene unbemannte Höhenluftfahrzeug.

### VORTEILE

Das erfindungsgemäße unbemannte Höhenluftfahrzeug, das zumindest einen Rumpf, Tragflügel, Steuerflächen und zumindest eine Antriebseinrichtung aufweist, die zumindest eine Antriebsmaschine und eine Propeller aufweist, zeichnet sich dadurch aus, dass der jeweilige Tragflügel eine Mehrzahl von sich in einer Richtung quer, vorzugsweise rechtwinklig zur Rumpflängsachse erstreckenden Flügelholmen und Schläuchen aufweist, die von einer eine Flügelbespannung bildenden Haut umgeben sind. Diese Flügelbespannung bestimmt die Querschnittskontur des Tragflügels, welcher ein Laminarprofil bildet, das bei geringem Strömungswiderstand einen hohen Auftrieb erzeugt. Der jeweilige Tragflügel ist an seinem vom Rumpf abgewandten freien Ende mit einem sich quer zur Tragflügellängsachse erstreckenden Winglet versehen. Das Winglet ist mit einer bewegbaren Steuerfläche versehen, die die Erzeugung einer aerodynamischen Seitenkraft ermöglicht, um das Luftfahrzeug in eine Schrägrolllage bringen zu können. Der Rumpf ist vorzugsweise rohrförmig ausgebildet und beispielsweise von einem Kohlefaser-Verbundwerkstoff-Rohr gebildet.

Ein derartiges erfindungsgemäßes unbemanntes Höhenluftfahrzeug, das durch eine besonders leichte Bauweise insbesondere als Stratosphären-Luftfahrzeug geeignet ist, ist als Flugzeug vorteilhaft mit einem dicken (z.B. 18 % Profildicke), gewölbten (z.B. 4,2 % Wölbung) Laminarprofilflügel ausgebildet, der bei geringem Widerstand bei hohen Auftriebsbeiwerten einen hohen Auftrieb erzeugt und ein großes Volumen aufweist. Das Höhenluftfahrzeug muss nur den Turbulenzen in großen Höhen standhalten, muss keinen Regen aushalten und muss den dynamischen Drücken bei ca. 30 m/sec in 15 km Flughöhe standhalten. Deshalb ist das Flugzeug für Belastungen von plus 2,5 g und minus 2 g ausgelegt. Weiterhin muss das Flugzeug die Belastung beim Rollen am Boden sowie beim Starten und Landen in ruhiger Luft aushalten.

Da das Höhenluftfahrzeug mit zumindest einem einen Propeller aufweisenden Antrieb versehen ist, wird das Luftfahrzeug zudem in die Lage versetzt, eigenständig, unabhängig von herrschenden Winden, eine horizontale Positionsveränderung vorzunehmen. Ein derartiges mit einem Antrieb versehenes Höhenluftfahrzeug ist somit sowohl horizontal, als auch vertikal manövrierbar.

Der Flügel weist in seinem Inneren in Spannweitenrichtung mehrere druckfeste (vorzugsweise bis 1,5 bar Überdruck feste) Schläuche aus Aramid-Folie (z.B. KEVLAR®-Folie) mit Aluminiumbedampfung zum UV-Schutz und zur Gasabdichtung auf, die das Flügelprofil im Wesentlichen ausfüllen.

Diese Kammern zur Gasspeicherung bildenden Schläuche sind mit einem Druck von 0,2 bis zu 1,2 bar jeweils vorzugsweise getrennt zu 2/3 des verfügbaren Volumens mit reinem Wasserstoffgas und zu 1/3 mit reinem Sauerstoffgas befüllbar. Dieser geringe Arbeitsdruck der Flügelspeicher von maximal 1,2 bar Überdruck ermöglicht einen sehr energieeffizienten Betrieb verglichen mit einem Hochdruckspeicher mit 700 bar Betriebsdruck, bei dem ein erheblicher Prozentsatz der erzeugten Energie zur Komprimierung des Wasserstoffgases verwendet wird, die dann verloren ist. Die Speicherenergiedichte bei dem erfindungsgemäßen Höhenflugzeug erreicht 1300 Wh pro kg.

Für den Höhenflug muss der Flügel in extremer Leichtbauweise ausgeführt werden. Dabei ist es besonders von Vorteil, wenn der Tragflügel eine im Längsschnitt aerodynamisch geformte Hülle aus einer dünnen Folie, vorzugsweise einer durchsichtigen Polyesterfolie, auf der Oberseite und einer gegen die UV-Strahlung mit Aluminium bedampften hochfesten Aramidfolie auf der Flügelunterseite, aufweist.

Eine wegen ihrer Festigkeit besonders geeignete durchsichtige Polyesterfolie ist eine biaxial orientierte Polyesterfolie, wie sie beispielsweise unter dem Handelsnamen "MYLAR®" auf dem Markt verfügbar ist.

Unter der durchsichtigen Polyesterfolie werden vorteilhaft über die ganze Flügeloberseite und Höhenleitwerksoberseite Dünnschichtsolarzellen des Typs CIGS (Copper Indium Gallium Selenide) angebracht, die vorteilhaft auf einer dünnen Polyimid-Folie (z.B. KAPTON®-Folie) aufgebracht und mit einer weiteren Folie abgedeckt werden, wobei der gesamte Aufbau vorteilhaft nur ungefähr 50 µm dick und damit sehr leicht ist und einen Wirkungsgrad bis zu 16 % erreicht. Derartige CIGS-Dünnschicht-Solarzellen weisen ein sehr geringes Gewicht auf und arbeiten auch bei erhöhter Temperatur, wie sie in großen Höhen auftreten kann noch gut ohne separate Kühleinrichtungen, so dass in Verbindung mit dem aus einer dünnen Folie gebildeten Trägerelement ein sehr leichter Solargenerator gebildet ist.

Weiter ist es von Vorteil, wenn der Tragflügel in Spannweitenrichtung zumindest zwei mit Wasserstoffgas befüllbare und einen mit Sauerstoffgas befüllbaren Schlauch oder zumindest einen entsprechenden röhrenförmigen gasdichten Holm aufweist, die beziehungsweise der im befüllten Zustand eine zusätzliche Versteifung des Tragflügels in Spannweitenrichtung bilden/bildet. Weiterhin ist es vorteilhaft, in der Nase des Flügelprofils einen Überdruckschlauch oder röhrenförmigen Holm anzuordnen, der denselben Radius wie das Flügelprofil aufweist und so eine formstabile leichte Flügelvorderkante bildet, die sich auf die dahinter liegenden Schläuche abstützen kann. Zusätzlich werden die Schläuche oder röhrenförmige Holme so im Inneren des Profils angeordnet, dass die Außenhaut in der gewünschten Profilform über die Schläuche oder röhrenförmige Holme gespannt wird und so ein sehr glatter Flügel ohne Falten entsteht, der als Laminarprofil geeignet ist. Bei dieser Bauweise werden neben dem oder den Flügelholm(en) und den Druckschläuchen nur wenige sehr leichte Spanten benötigt, so dass mit der gespannten Außenhaut ein sehr leichter, aerodynamisch hochwertiger Flügel entsteht.

Der jeweilige röhrenförmige und gasdichte Flügelholm ist vorteilhaft so ausgebildet, dass eine innere Röhre (Innenrohr) den Innendruck sowie auch die auf ihren Flächenanteil am Holm entfallenden Zug- und Druckkräfte aus dem Flügelbiegemoment und den Flügeldruckkräften aufnimmt. Um dieses Innenrohr ist ein längsgewelltes Außenrohr gelegt und längs der Berührungsflächen durchgehend vollflächig verklebt, so dass ein einheitliches rohrförmiges Tragelement entsteht.

Vorzugsweise ist jeder Tragflügel mit zumindest einer Antriebsgondel zur Aufnahme einer Antriebseinrichtung versehen.

Besonders vorteilhaft ist es, wenn der Rumpf mit einem sich vom Rumpf nach oben und nach unten erstreckenden Abspannturm versehen ist und wenn Spanneinrichtungen vorgesehen sind, die die Tragflügel, vorzugsweise deren freie Enden, und/oder die Antriebsgondeln gegen den Rumpf und/oder den Abspannturm verspannen.

Um einen möglichst steifen, leichten Flügel zu erhalten wird das Biegemoment in der Flügelwurzel durch die Abspannung über den Abspannturm in der Mitte des Flügels beispielsweise zu den Antriebsgondeln auf zwei Dritteln der Flügelspannweite so weit wie möglich verringert. Dadurch wird, zusammen mit dem dicken (18 % Profildicke) Flügelprofil, das eine günstige hohe Bauform des Flügelholmes erlaubt, gleichzeitig ein gegenüber einem nicht abgespannten Flügel viel steiferer Flügel von sehr geringem Gewicht geschaffen.

Durch die Versteifung des Flügels und die Wahl einer Flügelstreckung von z.B. 16 mit den Winglets von z.B. 7,5 m Höhe bei einer Spannweite von 50 m und 250 m² Flügelfläche werden Probleme mit der Aeroelastizität des Flügels in böiger Luft vermieden, die z.B. zur Zerstörung des Helios Flugzeugprototypen im Flug geführt haben.

Vorzugsweise zeichnet sich der Tragflügel durch ein extrem niedriges Gewicht aus, indem er seine Steifigkeit in Spannweitenrichtung durch vorzugsweise zwei röhrenförmige Flügelholme aus Kevlarfolie oder hochfestem CFK-Gewebe erhält. Zusätzlich ist der Flügel über den Abspannturm in der Flügelmitte abgespannt. Dadurch werden die Biegemomente in den Flügelholmen minimiert und die leichtestmögliche Bauweise wird erzielt. Der Tragflügel besitzt durch die Wasserstoffkammern sowohl eine aerostatische Auftriebskomponente als auch bei entsprechender Anströmung eine aerodynamische Auftriebskomponente.

Vorzugsweise ist der zumindest eine Propeller nach Art eines Hubschrauberrotors mit Schlaggelenken versehen.

Besonders vorteilhaft ist es wenn der zumindest eine Propeller einen möglichst großen Durchmesser besitzt, der zu einem geringen Antriebsenergieverbrauch führt. Bei großen Propellerdurchmessern können bei unsymmetrischer Anströmung beträchtliche Störmomente auf die Propellerwelle übertragen werden, die die Anwendung von optischen Sensoren (z.B. zu Aufklärungszwecken) durch die Erzeugung von Vibrationen stark beeinträchtigen. Daher wird das Propellerblatt vorteilhaft nach Art eines Hubschrauberrotors durchlaufend ausgeführt mit einem Schlaggelenk an der Welle, das eine Schlagbewegung in Flugrichtung erlaubt. Durch die Schlagbewegung werden die Störkräfte vorteilhaft aerodynamisch kompensiert und es können keine Störmomente mehr auf die Propellerwelle übertragen werden.

Besonders bevorzugt ist ein erfindungsgemäßes Höhenluftfahrzeug mit zumindest einer elektrischen Antriebsmaschine. Bei diesem Höhenluftfahrzeug ist zur Erzeugung der Antriebsenergie eine photovoltaische Energieversorgungseinrichtung vorgesehen. Diese Energieversorgungseinrichtung weist zumindest einen photovoltaischen Solargenerator auf, der auftreffende solare Strahlungsenergie in elektrische Energie wandelt. Sie verfügt zudem über zumindest ein Wasserelektrolysegerät zur Erzeugung von Wasserstoff und Sauerstoff aus Wasser, das bei konstant gehaltenem Bodendruck arbeitet, um eine Verunreinigung der Gase durch Wasserstoffdiffusion zu vermeiden. Weiterhin weist die Energieversorgungseinrichtung Folgendes auf: zumindest einen Wasserstoffvorratsbehälter, der mit dem Wasserelektrolysegerät über eine erste Wasserleitung verbunden ist, zumindest einen, vorzugsweise von einem ersten Schlauch gebildeten, Wasserstoffvorratsbehälter, der über eine erste Wasserstoffleitung mit dem Wasserelektrolysegerät verbunden ist, zumindest einen, vorzugsweise von einem zweiten Schlauch gebildeten, Sauerstoffvorratsbehälter, der über eine erste Sauerstoffleitung mit dem Wasserelektrolysegerät verbunden ist; zumindest eine Brennstoffzelle, die bei konstant gehaltenem Bodendruck in einem geschlossenen Kreislauf arbeitet, so dass Verunreinigungen der Brenngase durch Luftkohlendioxid vermieden werden können, wobei die Brennstoffzelle über eine zweite Wasserstoffleitung mit dem Wasserstoffvorratsbehälter verbunden ist und über eine zweite Sauerstoffleitung mit dem Sauerstoffvorratsbehälter verbunden ist und weiterhin über eine zweite Wasserleitung mit dem Wasservorratsbehälter verbunden ist. Schließlich ist dieses Höhenluftfahrzeug noch mit einer Steuerungseinrichtung versehen, die mit dem Solargenerator, dem Wasserelektrolysegerät und der Brennstoffzelle elektrisch verbunden ist.

Durch diese Energieversorgungseinrichtung ist das Höhenluftfahrzeug in der Lage mittels des Solargenerators und des Wasserelektrolysegeräts selbsttätig Wasserstoff und Sauerstoff aus Wasser zu erzeugen, um damit eine Brennstoffzelle zu betreiben, die die unter anderem für den Antrieb erforderliche elektrische Energie liefert.

Die zumindest eine Antriebsmaschine kann aber auch einen Wasserstoff-Sauerstoff-Verbrennungsmotor aufweisen.

Vorzugsweise weist der Solargenerator zumindest ein mit CIGS-Dünnschichtsolarzellen versehenes Trägerelement auf, das von einer dünnen Folie, vorzugsweise einer Polyimid-Folie, gebildet ist. Der CIGS-Solargenerator erreicht einen hohen Wirkungsgrad von 16 % bei einem Flächengewicht unter 100 g/m².

Besonders bevorzugt ist es, wenn die Solarzellen Dünnschicht-Solarzellen sind, wobei es sich dabei vorzugsweise um Cadmium-Tellurit-Zellen handelt. Derartige Dünnschicht-Solarzellen weisen ebenfalls ein sehr geringes Gewicht auf, so dass in Verbindung mit dem aus einer dünnen Folie gebildeten Trägerelement ein sehr leichter Solargenerator gebildet ist. Die Cadmium-Tellurit-Dünnschichtzellen erreichen zwar einen geringeren Wirkungsgrad von 9 %, sind aber deutlich leichter als die CIGS-Dünnschichtsolarzellen.

Vorzugsweise ist die Energieversorgungseinrichtung zusätzlich mit einem elektrischen Energiespeicher versehen, der beispielsweise als Akkumulator ausgebildet ist. Dieser elektrische Energiespeicher bildet einen Pufferspeicher, der kurzfristig elektrische Energie abgeben kann, wenn der Stromgenerator über einen kurzen Zeitraum nicht mit ausreichend Strahlungsenergie beaufschlagt wird. Dieser elektrische Energiespeicher dient daher zur Überbrückung der Zeit, die benötigt wird, um die Brennstoffzelle zu aktivieren oder, falls die Brennstoffzelle nicht aktiviert wird, zur Überbrückung jener Zeit, die beispielsweise bei einer kurzfristigen Abschattung des Sonnenlichts zu überbrücken ist bis das Sonnenlicht wieder auf den Stromgenerator auftrifft.

Die erfindungsgemäße photovoltaische Energieversorgungseinrichtung ist bevorzugt mit einer Steuerungseinrichtung versehen, welche so ausgestaltet ist, dass sie bei Vorhandensein von Strahlungsenergie die vom Stromgenerator erzeugte elektrische Energie einem elektrischen Verbraucheranschluss der Energieversorgungseinrichtung zuführt wird und dass sie bei Nicht-Vorhandensein von Strahlungsenergie oder wenn die vom Stromgenerator erzeugte elektrische Energie für einen vorgegebenen Energiebedarf nicht ausreicht, die Brennstoffzelle aktiviert, um elektrische Energie an den Verbraucheranschluss zu liefern. Diese Steuerungseinrichtung kann somit dafür sorgen, dass die Brennstoffzelle automatisch aktiviert wird, wenn nicht ausreichend oder keine Strahlungsenergie zur Verfügung steht.

Besonders bevorzugt ist die Ausgestaltung der Steuerungseinrichtung derart, dass sie bei Vorhandensein von insbesondere solarer Strahlungsenergie einen Teil der vom Stromgenerator erzeugten elektrischen Energie dem Wasserstoffgenerator zuführt, und dass sie dem Wasserstoffgenerator Wasser aus dem Wasservorratsbehälter zuführt, so dass der Wasserstoffgenerator aktiviert wird, um aus dem ihm zugeführten Wasser Wasserstoff zu erzeugen, der im Wasserstoffvorratsbehälter gespeichert wird. Bei dieser Ausführungsform wird von der vom Stromgenerator erzeugten elektrischen Energie ein Teil dazu verwendet, den Wasserstoffgenerator zu betreiben, um den Wasserstoff zu erzeugen, der von der Brennstoffzelle zur Erzeugung von elektrischer Energie benötigt wird, wenn der Stromgenerator keine oder nicht ausreichende elektrische Energie liefert. Dabei kann die Steuerungseinrichtung die Menge an elektrischer Energie, die dem Wasserstoffgenerator zugeführt wird, oder auch die Einschaltzeiten des Wasserstoffgenerators in Abhängigkeit vom vorhandenen Wasserstoffvorrat steuern.

Vorteilhaft ist auch, wenn ein Teil der vom Stromgenerator und/oder von der Brennstoffzelle erzeugten elektrischen Energie dem Energiespeicher zugeführt wird, um diesen aufzuladen. Dadurch wird gewährleistet, dass stets elektrische Energie im Energiespeicher gepuffert wird, um bei Bedarf unmittelbar daraus abgerufen werden zu können.

In einer besonderen Ausgestaltung des Höhenluftfahrzeugs ist die Haut der Tragflügelbespannung wetterfest, insbesondere regenfest, so dass das Luftfahrzeug dazu geeignet ist, auch in der Tropopause und der Troposphäre fliegen zu können. Diese Variante des unbemannten Höhenluftfahrzeugs eignet sich besonders dazu, als Betankungsflugzeug eingesetzt zu werden, welches in niedrigeren Höhen als ein Stratosphären-Luftfahrzeug fliegen kann und dort bei größerer Luftdichte mit geringerem Energieaufwand für die Zeitspanne der Erzeugung von Wasserstoff und Sauerstoff aus Wasser mittels solarer Strahlungsenergie unterwegs ist.

Dieses zur Luft-zu-Luft-Betankung fähige spezialisierte Solarenergiesammel- und Luftbetankungs-Luftfahrzeug, ist durch eine feste, aber leichte Bauweise insbesondere als Luftfahrzeug für Höhen von 3 km bis 21 km geeignet. Es ist als Flugzeug vorteilhaft mit einem dicken (z.B. 18 % Profildicke), gewölbten (z.B. 2,1 % Wölbung) Laminarprofil-Flügel ausgebildet, der bei geringem Widerstand und kleinen Auftriebsbeiwerten einen hohen Auftrieb erzeugt und ein großes Volumen aufweist. Dieses Betankungs-Flugzeug (Tanker) muss den Turbulenzen in geringeren Höhen standhalten und muss leichten Regen aushalten und den dynamischen Drücken bei 30 m/sec in 15 km Flughöhe standhalten. Deshalb ist das Flugzeug für Belastungen von plus 6 g und minus 3 g ausgelegt. Weiterhin muss das Flugzeug der Belastung beim Rollen am Boden und beim Starten und Landen in ruhiger Luft standhalten.

Der Flügel dieses Betankungsluftfahrzeugs weist in seinem Inneren in Spannweitenrichtung mehrere druckfeste (vorzugsweise bis 2,5 bar Überdruck feste) Schläuche aus Aramid-Folie (z.B. KEVLAR®-Folie) mit Aluminiumbedampfung zum UV-Schutz und zur Gasabdichtung auf, die sein Profil so weit wie möglich ausfüllen. Diese Schläuche sind mit einem Druck von 1,2 bar bis zu 2,2 bar jeweils getrennt zu 2/3 des verfügbaren Volumens mit reinem Wasserstoffgas und zu 1/3 mit reinem Sauerstoffgas befüllbar. Dieser geringe Arbeitsdruck der Flügelspeicher von maximal 2,2 bar ermöglicht einen sehr energieeffizienten Speicherbetrieb verglichen mit einem Hochdruckspeicher mit 700 bar Betriebsdruck, bei dem ein erheblicher Prozentsatz der erzeugten Energie zur Komprimierung des Wasserstoffgases verwendet wird, die dann verloren ist.

Die Speicherenergiedichte bei dem Tankerflugzeug erreicht 2600 Wh pro kg, weil in geringeren Flughöhen unter 10 km der statische Auftrieb des gespeicherten Wasserstoffgases stärker zum Tragen kommt und damit ein sehr effizientes Energiesammeln möglich ist.

Der den Luftfahrzeugverband betreffenden Teil der Aufgabe wird gelöst durch einen Luftfahrzeugverband aus zumindest einem ersten unbemannten Höhenluftfahrzeug, das ein Stratosphärenluftfahrzeug bildet, und zumindest einem zweiten unbemannten Höhenluftfahrzeug, bei dem die Haut der Tragflügelbespannung wetterfest, insbesondere regenfest ausgebildet ist, so dass dieses zweite Luftfahrzeug dazu geeignet ist, auch in der Tropopause und der Troposphäre fliegen zu können, wobei dieses zweite Höhenluftfahrzeug ein Betankungsluftfahrzeug für das erste Höhenluftfahrzeug bildet. Mit einem derartigen Luftfahrzeugverband ist es möglich, das erste Höhenluftfahrzeug beispielsweise als Aufklärungsplattform nahezu permanent in der Stratosphäre positioniert zu lassen und dieses erste Luftfahrzeug bei Bedarf mittels des Betankungsluftfahrzeugs wieder aufzutanken. Der erfindungsgemäße Luftfahrzeugverband ist also gekennzeichnet durch eine kooperierende Gruppe von mindestens zwei spezialisierten Luftfahrzeugen, nämlich zumindest einem Solarenergiesammel- und Tanker-Flugzeug und zumindest einem in der Luft betankbaren Höhenluftfahrzeug für Höhen bis 38 km.

Ein derartiger Luftfahrzeugverband wird gemäß dem in Patentanspruch 25 angegebenen Verfahren automatisch betrieben. Bei diesem erfindungsgemäßen Verfahren stellt das Betankungsluftfahrzeug während des Fluges beider Luftfahrzeuge zum ersten Luftfahrzeug eine Betankungsverbindung her, über die vom Betankungsluftfahrzeug Wasserstoffgas an einen Wasserstoffspeicher (Schlauchspeicher) des ersten Luftfahrzeugs und Sauerstoffgas an einen Sauerstoffspeicher (Schlauchspeicher) des ersten Luftfahrzeugs geliefert wird. Währenddessen wird vom ersten Luftfahrzeug Wasser, das in der Brennstoffzelle des ersten Luftfahrzeugs entstanden ist, an das Betankungsluftfahrzeug zurückgeliefert. Nach Ende des Betankungsvorgangs sinkt das Betankungsluftfahrzeug auf eine niedrigere Höhe ab und erzeugt dort mittels der bordeigenen Wasserelektrolyseeinrichtung und aufgefangener Solarenergie aus dem bei der Betankung aufgenommenem Wasser und gegebenenfalls aus der Umgebung aufgenommenem Wasser wieder Wasserstoffgas und Sauerstoffgas. Diese beiden neu erzeugten Gase werden in den entsprechenden bordeigenen Wasserstoffspeichern beziehungsweise Sauerstoffspeichern gespeichert. Nach Abschluss des Gaserzeugungsprozesses steigt das Betankungsflugzeug wieder auf ein höheres Flugniveau auf, um einen erneuten Betankungsvorgang an einem ersten Luftfahrzeug (Stratosphären-Luftfahrzeug) durchführen zu können.

Die Luft-zu-Luft-Betankung findet vorzugsweise in Höhen von 15 bis 20 km statt. Dabei hat der Tanker einen Anfangsspeicherdruck von maximal 2,2 bar der im Lauf der Betankung auf 1,2 bar absinkt. Das zu betankende Höhenluftfahrzeug hat einen Anfangsspeicherdruck von 0,2 bis 0,3 bar und erhält im Laufe der Betankung einen Enddruck von maximal 1,2 bar, wenn es voll getankt ist. Das Überströmen des Gases erfolgt durch die Druckdifferenz ohne Pumpen. Die übertragene Treibstoffmenge beträgt dabei vorzugsweise 80 Norm m³ Wasserstoffgas und 40 Norm m³ Sauerstoffgas. Bei den erfindungsgemäß gewählten Drücken wird eine hohe Speicherfähigkeit bei geringem Speichergewicht erreicht.

Die Wasserstoffbehälter dienen in niedrigeren Flughöhen zusätzlich vorteilhaft als Auftriebskörper und verringern so die erforderliche Antriebsleistung. Durch die Anordnung der Brennstoffgasspeicher in dem dicken Laminarflügel entsteht vorteilhaft kein zusätzlicher Luftwiderstand durch die Brennstoffspeicher und durch die Auftriebswirkung des Wasserstoffgases entsteht vorteilhaft Auftrieb und kein zusätzliches Gewicht, wie z.B. durch Batterien zur Energiespeicherung.

Die Energiespeicherung geschieht durch Aufspalten von Wasser durch PEM-Wasserelektrolyse mit Solarenergie in Wasserstoffgas und Sauerstoffgas. Die Elektrolyse wird vorteilhaft bei konstant auf Bodendruck gehaltenem Betriebsdruck ausgeführt. Dadurch kann die Diffusion des produzierten Wasserstoffs in den Sauerstoffabgang des Elektolysegerätes auf sehr geringen Mengen gehalten werden und so reines Gas erzeugt werden, so dass auch im Langzeitbetrieb keine gewichtsaufwendige Reinigung des Gases erfolgen muss und es kann ein hoher Wirkungsgrad von über 70 % erreicht werden.

Die reinen Gase Wasserstoff und Sauerstoff können entweder in einer PEM-Brennstoffzelle (Polymerelektrolyt-Brennstoffzelle) zur Erzeugung von elektrischem Strom umgesetzt werden, oder in einem Wasserstoff-Sauerstoff-Verbrennungsmotor nach dem Dieselprinzip direkt in mechanische Energie zum Antrieb der Propeller eingesetzt werden.

Der Antrieb der Brennstoffzellen erfolgt vorteilhaft durch die mitgeführten reinen Gase ohne Verunreinigungen durch Kohlendioxidgas, das andernfalls mit hohem Aufwand entfernt werden müsste, um Schäden an den Brennstoffzellen zu vermeiden. Der Betrieb der Brennstoffzellen erfolgt vorteilhaft bei konstantem Bodendruck, so kann ein hoher Wirkungsgrad von über 60% erreicht werden.

In großen Höhen können weder die Brennstoffzellen noch der Wasserstoffverbrennungsmotor bei dem geringen Umgebungsdruck von 1/100 bar gut arbeiten. Daher werden beide vorteilhaft bei dem in dem Wasserstoffzuführtank herrschenden Druck von konstant 1,2 bar betrieben. Bei diesem Druck kann vorteilhaft die Kühlung der Bauteile und der Betrieb der Geräte ausgeführt werden.

Bevorzugte Ausführungsbeispiele der Erfindung mit zusätzlichen Ausgestaltungsdetails und weiteren Vorteilen sind nachfolgend unter Bezugnahme auf die beigefügten Zeichnungen näher beschrieben und erläutert.

### KURZE BESCHREIBUNG DER ZEICHNUNGEN

Es zeigt:
- Fig. 1: eine rückwärtige Ansicht eines erfindungsgemäßen Höhenluftfahrzeugs in Flugrichtung;
- Fig. 2: eine perspektivische Ansicht des erfindungsgemäßen Höhenluftfahrzeugs nach Fig. 1;
- Fig. 3: einen Querschnitt durch einen Tragflügel entlang der Linie III-III in Fig. 1;
- Fig. 4: einen Querschnitt durch einen verstärkten röhrenförmigen Holm;
- Fig. 5: einen Verband aus einem Betankungsflugzeug und einem zu betankenden Höhenluftfahrzeug;
- Fig. 6: eine schematische Darstellung der Energieversorgungseinrichtung des erfindungsgemäßen Höhenluftfahrzeugs;
- Fig. 7: eine schematische Ablaufdarstellung eines Betankungskreislaufs bei einem Verband nach Fig. 4; und
- Fig. 8: die Integration von Arbeitsmaschinen in einem Wasserstofftank als schematische Schnittdarstellung entlang der Linie XIII-XIII in Fig. 3.

### DARSTELLUNG VON BEVORZUGTEN AUSFÜHRUNGSBEISPIELEN

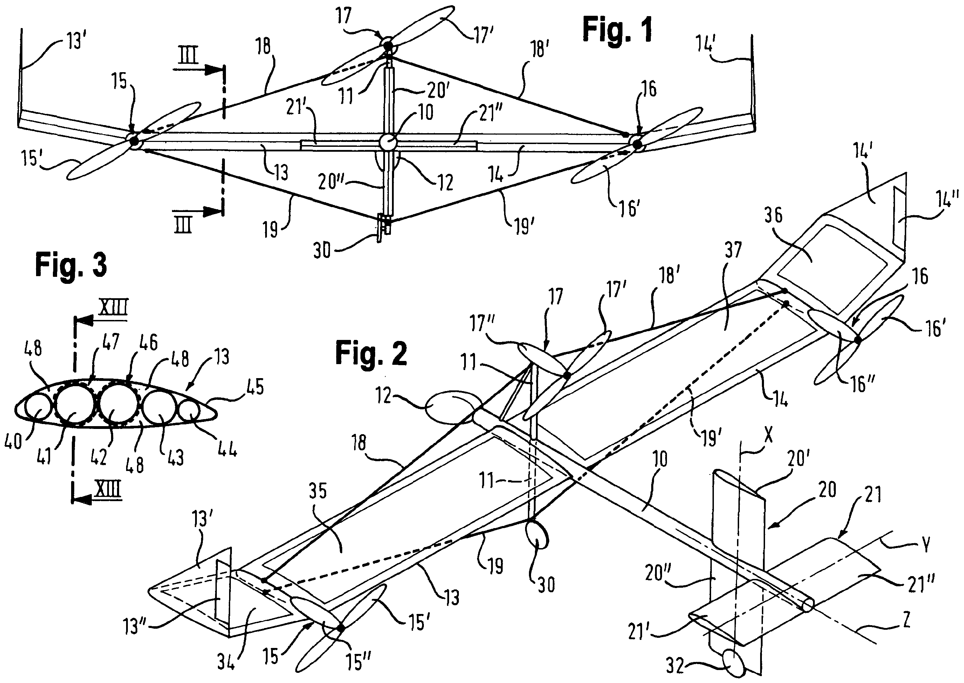

In Fig. 1 ist ein erfindungsgemäßes Höhenluftfahrzeug in einer rückwärtigen Ansicht in Flugrichtung dargestellt. An einem rohrförmigen Rumpf 10 (Fig. 2), der an der Rumpfnase mit einer ballonartigen Spitze 12 versehen ist, sind seitlich zwei Tragflügel 13, 14 angebracht. An den freien Enden eines jeweiligen Tragflügels 13, 14 ist ein sich im Wesentlichen vertikal erstreckendes Winglet 13', 14' vorgesehen. An jedem Tragflügel 13, 14 ist auf etwa 2/3 seiner Länge vom Rumpf beabstandet eine Antriebsgondel 15, 16 angebracht, in der jeweils ein Antriebsmotor 15", 16" angeordnet ist, der jeweils einen zugeordneten Propeller 15', 16' antreibt. In der ballonartigen Rumpfnase 12, die als Radom ausgebildet ist, kann beispielsweise ein Radargerät vorgesehen sein.

Eine dritte Antriebsgondel 17 ist auf der Spitze eines von dem Tragflügel nach oben hervorstehenden Abspannmastes 11 angebracht. Auch die dritte Antriebsgondel 17 weist einen Antriebsmotor 17" auf, der einen zugeordneten Propeller 17' antreibt. Obwohl in den Fig. 1 und 2 die Propeller 15', 16', 17' als Druckpropeller dargestellt sind, können die Antriebseinrichtungen selbstverständlich auch mit Zugpropellern ausgestattet sein.

Der Abspannmast 11 erstreckt sich nicht nur vom Rumpf 10 nach oben, sondern ebenso nach unten über den Rumpf hinaus. Von der oberen Spitze des Abspannmastes 11 erstreckt sich ein linkes oberes Abspannseil 18 zu jenem Bereich des linken Tragflügels 13, an welchem die Antriebsgondel 15 befestigt ist. Auf die gleiche Weise erstreckt sich von der oberen Spitze des Abspannmastes 11 ein rechtes oberes Spannseil 18' zu jenem Bereich des rechten Tragflügels 14, an dem die rechte Antriebsgondel 16 angebracht ist. Ein linkes unteres Spannseil 19 erstreckt sich vom unteren Ende des Abspannmastes 11 zu dem Bereich des linken Tragflügels 13, an welchem die linke Antriebsgondel 15 angebracht ist und ein rechtes unteres Spannseil 19' erstreckt sich von der unteren Spitze des Abspannmastes 11 zu jenem Bereich des rechten Tragflügels 14, an welchem die rechte Antriebsgondel 16 angebracht ist.

Die Verspannung der freien Enden des Tragflügels gegen den Rumpf und/oder gegen den Abspannmast sorgt dafür, dass der Tragflügel unter der Last der an ihm angreifenden Auftriebskräfte nicht nach oben abknickt. Zusätzlich zu den an den freien Enden des Tragflügels und den an den Antriebsgondeln vorgesehenen Spannseilen können am Tragflügel weitere Spannseile zwischen dem Tragflügel und dem Abspannmast angebracht werden.

Am Heck des rohrförmigen Rumpfs 10 sind hintereinander zunächst ein sich vertikal erstreckendes Seitenleitwerk 20 und ein sich horizontal erstreckendes Höhenleitwerk 21 vorgesehen. Das Seitenleitwerk 20 besteht aus einem oberhalb des Rumpfes vorgesehenen Seitenleitwerksabschnitt 20' und einem unterhalb des Rumpfes 10 vorgesehenen unteren Seitenleitwerksabschnitt 20". Sowohl der obere Seitenleitwerksabschnitt 20' als auch der untere Seitenleitwerksabschnitt 20" sind synchron um eine gemeinsame rechtwinklig zur Rumpfachse Z und im Horizontalflug vertikal verlaufende Seitenleitwerksschwenkachse X schwenkbar am Rumpf 10 gelagert und bilden so Seitenruder.

Auch das Höhenleitwerk 21 ist zweigeteilt und besteht aus einem links vom Rumpf 10 gelegenen linken Höhenleitwerksabschnitt 21' und einem rechts vom Rumpf gelegenen rechten Höhenleitwerksabschnitt 21". Beide Höhenleitwerksabschnitte 21', 21" sind gemeinsam synchron um eine rechtwinklig zur Rumpflängsachse Z und im Horizontalflug waagerecht verlaufende Schwenkachse Y schwenkbar am Rumpf 10 gelagert und bilden so Höhenruder.

Sowohl am unteren Ende des Abspannmastes 11 als auch am unteren Ende des Seitenleitwerks 20 ist jeweils ein Fahrwerk 30, 32 vorgesehen, das in den Fig. 1 und 2 symbolisch dargestellt ist. Das Fahrwerk 30, 32 ist widerstandsarm im unteren Teil des Abspannturms 11 und im unteren Seitenruder 20" ausfahrbar eingebaut. Auch (nicht gezeigte) Nutzlastgondeln können unter dem Rumpf oder unter den Tragflügeln vorgesehen sein.

In Fig. 2 ist auch zu erkennen, dass die Tragflügel 13, 14 an ihrer Oberseite unterhalb der im oberen Bereich des Tragflügels transparent ausgebildeten Haut 45 kleinflächig unterteilte Solarzellenpaneele 34, 35, 36, 37 aufweisen. Auch das Höhenleitwerk 21 kann in gleicher Weise mit Solarzellen versehen sein. Die Solarzellenpaneele sind mit der Außenhaut mit einem thermisch gut leitenden Kleber so elastisch verbunden, dass keine Lasten auf die Solarzellen übertragen werden.

Aus dem in Fig. 3 dargestellten Tragflügelquerschnitt ist zu erkennen, dass im Inneren des jeweiligen Tragflügels 13, 14 Schläuche 40, 41, 42, 43 und 44 vorgesehen sind, die Längsrichtung des jeweiligen Tragflügels 13, 14, also rechtwinklig zur Rumpflängsachse Z, verlaufen und derart nebeneinander angeordnet sind, dass sie eine die Tragflügelbespannung bildende Hülle 45 abstützen. Die Zwischenräume zwischen den Schläuchen 40, 41, 42, 43 und 44 sowie der Hülle 45 werden mittels eines (nicht gezeigten) Lüfters mit Umgebungsluft gekühlt, so dass in den als Tanks ausgebildeten Schläuchen 40, 41, 42, 43, 44 eventuelle entstehende Wärme an die Umgebung abgeführt wird.

Des Weiteren ist in Fig. 3 zu erkennen, dass zwei der Schläuche 41, 42 als röhrenförmige gasdichte und gegen Beulen und Einknicken verstärkte Flügelholme 46 und 47 ausgebildet sind. Die aus den beiden Flügelholmen gebildeten Profile zur Versteifung des jeweiligen Tragflügels sind miteinander und mit dem Rumpf 10 verbunden und stützen den Abspannmast 11.

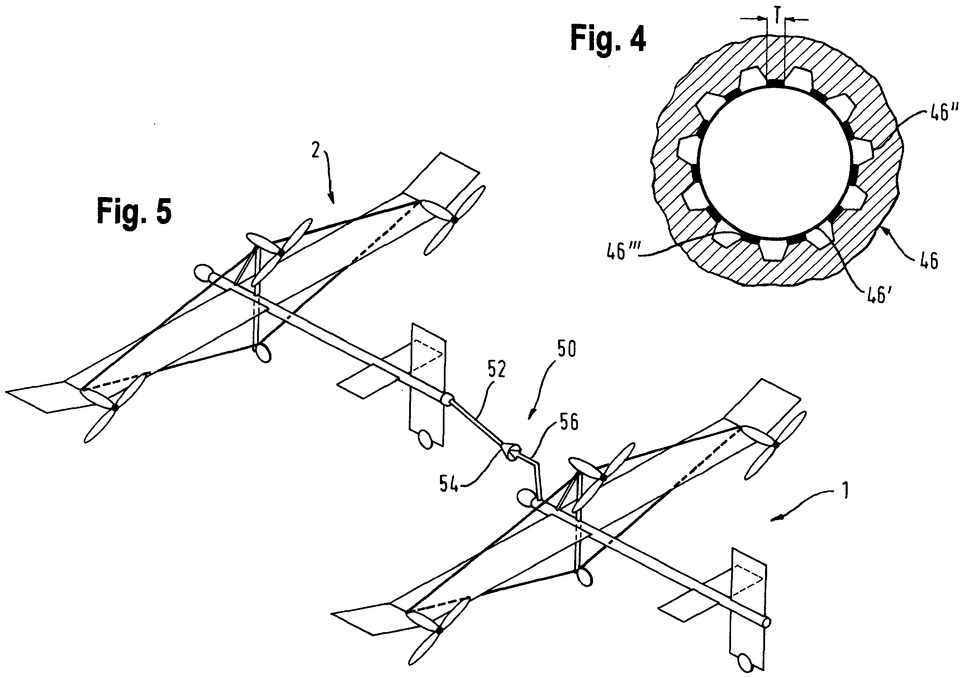

Fig. 4 zeigt einen Querschnitt durch einen verstärkten röhrenförmigen Flügelholm 46, der-wie der Flügelholm 47 - aus einem Innenrohr 46' und einem in Längsrichtung gewellten Außenrohr 46" besteht. Das Innenrohr 46' und das längsgewellte Außenrohr 46" sind an ihren Klebestellen 46'" bildenden Berührungsflächen durchgehend miteinander verklebt, so dass ein einheitliches Tragelement gebildet ist. Das gasdichte Innenrohr 46' übernimmt dabei die Aufgabe des Schlauchs 41 und dient somit als Aufnahmeraum für Wasserstoffgas oder Sauerstoffgas.

Das Innenrohr 46' ist beispielsweise als Schlauch aus Kevlar®-Folie oder Gewebe aus kohlenfaserverstärktem Kunststoff gebildet und weist beispielsweise bei einer Spannweite des Luftfahrzeugs von 50 m einen Durchmesser von 0,9 m auf. Die Wandstärke sowohl des Innenrohrs als auch des Außenrohrs beträgt beispielsweise 0,1 mm. Die Teilung T des Außenrohrs 46" beträgt in Umfangsrichtung gemessen beispielsweise 5 mm.

Durch das geschlossene Profil, das aus dem Außen- und Innenrohr gebildet ist, ist der so gebildete röhrenförmige Holm derart gegen Beulen verstärkt, dass er die volle rechnerische Biegemomentfestigkeit und Knickfestigkeit des Gesamtprofils ausnutzen kann. Zusätzlich ist der röhrenförmige Holm auf der Innenseite in regelmäßigen Abständen durch Ringe mit geschlossenem Profil verstärkt, die die Holmquerschnitte bis zur vollen Biege- und Knickfestigkeit eben und rund erhalten.

Der röhrenförmige Flügelholm übernimmt damit zwei Funktionen, einmal die eines lasttragenden Elements und zum zweiten die als Druckspeicher für Wasserstoff- oder Sauerstoffgas. Besonders vorteilhaft ist dabei, dass bei den gewählten Lasten und Betriebsdrücken die Materialstärken für den Drucktank annähernd gleich groß sind wie für den tragenden Holm, aber die Belastungen in unterschiedlichen Richtungen anfallen, so dass praktisch das Gewicht einer sonst zusätzlich vorzusehenden Komponente voll eingespart wird.

Die einzelnen Schläuche 40, 41, 42, 43 und 44 und die röhrenförmigen Flügelholme 46 und 47 bilden Kammern zur Speicherung von Wasserstoffgas beziehungsweise Sauerstoffgas. Zumindest einer der Schläuche kann auch eine Kammer zur Speicherung von bei der Energieerzeugung in einer Brennstoffzelle entstehendem Wasser ausgestaltet sein. Beim erfindungsgemäßen Höhenluftfahrzeug, das einen sehr großen Flügel aufweist und hohe Geschwindigkeiten erreichen kann, sind also das Wasserstoffgas und das Sauerstoffgas platzsparend in den Tragflügeln mit dickem Profil in druckfesten Schläuchen untergebracht, so dass kein zusätzlicher Widerstand entsteht.

Die aus den beiden Tragflügeln 13, 14 bestehende Tragfläche ist an beiden Enden mit den Winglets 13', 14' versehen, die so bemessen sind, dass sie die effektive Flügelstreckung um 60 % von 10 auf 16 erhöhen, ohne das Fluggewicht wesentlich zu erhöhen. Die Winglets 13', 14' sind bevorzugt mit Rudern 13", 14" ausgestattet, so dass das Höhenluftfahrzeug bei entsprechender Ruderansteuerung eine direkte Seitenkraft erzeugen kann, die einen schiebefreien Schrägflug mit geringem Widerstand mit z.B. 40° Schräglage erlaubt. Wenn die Flugrichtung quer zur Sonneneinstrahlung gewählt wird kann dadurch der Auftreffwinkel der Sonnenstrahlen auf die Solarzellen 34, 35, 36, 37 um 40° steiler gemacht werden. Bei einem Sonnenstand von 15° über dem Horizont kann damit der Auftreffwinkel auf 55° erhöht werden. Das bewirkt dass die Solarzellen statt 25 % der eintreffenden Sonnenenergie mit dem Manöver 80 % der Sonnenenergie nutzen können, also das 3,2-fache. Damit kann in den Tropen in den Morgen- und Abendstunden für 6 Stunden und in mittleren Breiten während des ganzen Tages die Energieausbeute während eines Tages nahezu verdoppelt werden und im Tagesmittelwert auf über 85 % des maximal möglichen Wertes angehoben werden.

In Fig. 5 ist ein Luftfahrzeugverband aus zwei erfindungsgemäßen Höhenluftfahrzeugen gezeigt, nämlich einem ersten Luftfahrzeug 1, das Stratosphären-Luftfahrzeug ausgelegt ist und für den Dauereinsatz in extremen Höhen vorgesehen ist, und ein Betankungsflugzeug 2, das robuster ausgelegt ist und für den Einsatz auch in der Troposphäre und Tropopause geeignet ist. Das Betankungsflugzeug 2 ist am rückwärtigen Rumpfende mit einem ausfahrbaren Betankungsrohr 52 versehen, welches an seinem freien Ende mit einer trichterförmigen Aufnahme 54 für ein ausklappbares vorderes Betankungsrohr 56 des ersten Höhenluftfahrzeugs 1 ausgestattet ist. Derartige Betankungsvorrichtungen sind in der Luftfahrttechnik hinreichend bekannt. Mittels dieser Betankungsvorrichtung 50 kann das erste Höhenluftfahrzeug 1 während des Fluges vom zweiten Höhenluftfahrzeug 2 Wasserstoff und Sauerstoff aufnehmen. Das erste Höhenluftfahrzeug 1 kann das bei der Verbrennung in der Brennstoffzelle entstandene Wasser durch die Betankungsvorrichtung an das Betankungsflugzeug 2 abgeben.

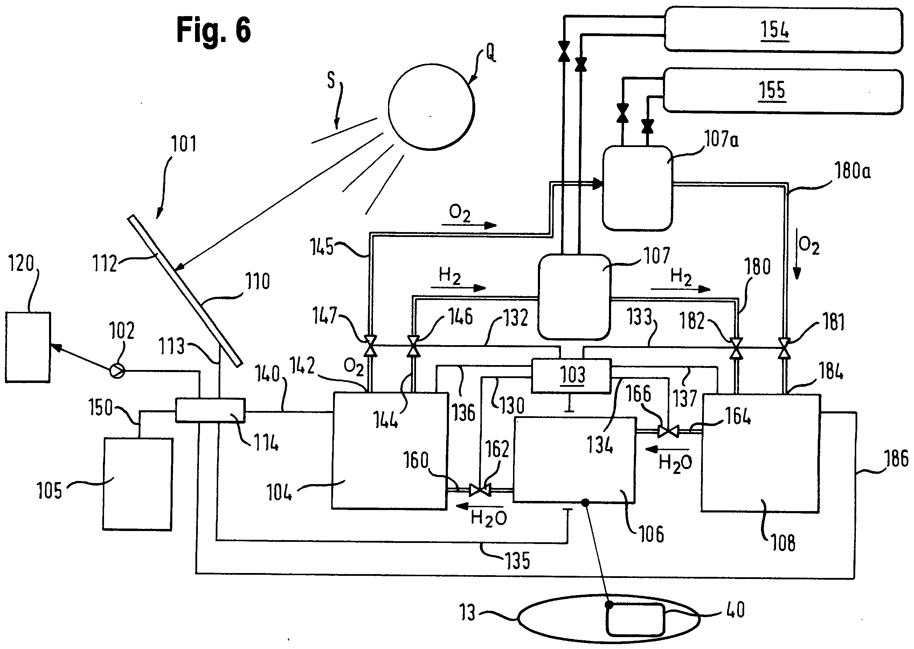

Als für den jeweiligen Propellerantrieb besonders geeignet hat sich ein elektrischer Antriebsmotor erwiesen. Die Antriebsenergie für den elektrischen Antriebsmotor und auch für andere elektrische Verbraucher des Höhenluftfahrzeugs und seiner Nutzlast erfolgt bevorzugt mittels einer in Fig. 6 gezeigten photovoltaische Energieversorgungseinrichtung, die versehen ist mit zumindest einem photovoltaischen Solargenerator 101, der auftreffende solare Strahlungsenergie S in elektrische Energie wandelt, einem Regelgerät für den Solargenerator 101 und zumindest einem Wasserelektrolysegerät zur Erzeugung von Wasserstoff und Sauerstoff aus Wasser.

Die Energieversorgungseinrichtung umfasst weiterhin zumindest einen Wasservorratsbehälter 106, der mit dem Wasserelektrolysegerät (Wasserstoffgenerator 104), das bei konstantem Bodendruck arbeitet, über eine erste Wasserleitung verbunden ist. Aus dem Wasserelektrolysegerät werden die erzeugten Gase in dem Betankungs-Luftfahrzeug vom Bodendruck durch Pumpen auf den Speicherdruck der Flügeltanks von 1,2 bar bis zu 2,2 bar gebracht. Die Flügeltanks umfassen zumindest einen vorzugsweise von der ersten Kammer gebildeten Wasserstoffvorratsbehälter 107 und einen von der zweiten Kammer gebildeten Sauerstoffvorratsbehälter 108, der über eine erste Wasserstoffleitung und eine erste Sauerstoffleitung mit dem Wasserelektroysegerät verbunden ist.

Die Energieversorgungseinrichtung umfasst weiterhin zumindest einen Wasserstoffzuführungsbehälter und einen Sauerstoffzuführungsbehälter, die aus den Flügeltanks versorgt werden, und die auf konstantem Bodendruck gehalten werden und zumindest mit einer Brennstoffzelle, die über eine zweite Wasserstoffleitung mit dem Wasserstoffvorratsbehälter und eine zweite Sauerstoffleitung mit dem Sauerstoffvorratsbehälter verbunden ist.

Die Brennstoffzelle erzeugt Wasser und elektrische Energie aus den Gasen und ist über eine zweite Wasserleitung mit dem Wasservorratsbehälter verbunden, der ebenfalls unter Bodendruck arbeitet. Die Energieversorgungseinrichtung verfügt über eine Steuerungseinrichtung 103, die mit dem Solargenerator, dem Wasserelektrolysegerät und der Brennstoffzelle elektrisch verbunden ist und die Energieversorgungseinrichtung so steuert, dass die Nutzlast, das Elektrolysegerät, die Motoren und die Gerätesteuerung ausreichend mit Energie versorgt werden.

In Fig. 6 ist der gesamte Solarantrieb mit der Energiespeicherung in Form von Wasserstoffgas und dem geschlossenen Wasser und Wasserstoffgas-Sauerstoffgas-Stoffkreislauf dargestellt. Alle Geräte und die Motoren arbeiten bei einem konstanten Druckniveau von 1,2 bar in einer Wasserstoffatmosphäre. Dieses Druckniveau wird auch in den Wasserstoff- und Sauerstoffzuführtanks aufrechterhalten.

In Fig. 6 ist ein den Solargenerator 101 bildender Stromgenerator gezeigt, der von solarer Strahlungsenergie S beaufschlagt wird. Der Solargenerator 101 ist auf seiner zur Sonne Q gerichteten Oberfläche mit Solarzellen 101 versehen, die auf einem Trägerelement 112 angebracht sind. Obwohl in der Figur nur beispielhaft ein mit Solarzellen 110 versehenes Trägerelement 112 gezeigt ist, kann der Solargenerator 101 selbstverständlich eine Vielzahl großflächiger mit Solarzellen 101 versehener Trägerelemente 112 aufweisen. Auch kann der Solargenerator andere Technologien als Solarzellen aufweisen, mit denen es möglich ist, aus solarer Strahlungsenergie elektrische Energie zu erzeugen.

Die im Solargenerator 101 erzeugte elektrische Energie wird durch eine erste Stromleitung 113 einer Stromverteilereinrichtung 114 zugeführt. Die Stromverteilereinrichtung 114 wird von einer zentralen Steuerungseinrichtung 103 derart gesteuert, dass ein Teil der über die erste Stromleitung 113 zugeführten elektrischen Energie an den Wasserstoffgenerator 104 weitergeleitet wird, der als Wasserstoffelektrolyseeinrichtung ausgestaltet ist.

Ein weiterer Teil der in die Stromverteilereinrichtung 114 eingeleiteten elektrischen Energie wird an einen Energiespeicher 105, beispielsweise einen Akkumulator, geleitet, um diesen aufzuladen, falls der elektrische Energiespeicher 105 nicht ausreichend geladen sein sollte. Der Rest der der Stromverteilereinrichtung 114 zugeführten elektrischen Energie wird an einen Verbraucheranschluss 102 geleitet, von wo die von der photovoltaische Energieversorgungseinrichtung bereitgestellte elektrische Nutzenergie an elektrische Verbraucher 120 abgegeben werden kann.

Der elektrische Energiespeicher bildet einen Pufferspeicher, der kurzfristig elektrische Energie abgeben kann, wenn der Solargenerator über einen kurzen Zeitraum nicht mit ausreichend solarer Strahlungsenergie beaufschlagt wird. Dieser elektrische Energiespeicher dient daher zur Überbrückung der Zeit, die benötigt wird, um die Brennstoffzelle zu aktivieren oder, falls die Brennstoffzelle nicht aktiviert wird, zur Überbrückung jener Zeit, die beispielsweise bei einer kurzfristigen Abschattung des Sonnenlichts, wie sie bei Flugmanövern auftreten kann, zu überbrücken ist, bis das Sonnenlicht wieder voll auf den Solargenerator auftrifft.

Der als Wasserstoffelektrolyseeinrichtung ausgebildete Wasserstoffgenerator 104 wird aus einem Wasservorratsbehälter 106, der von einer ersten Kammer des Höhenluftfahrzeugs (z.B. dem Schlauch 40 im Tragflügel 13) gebildet ist, über eine erste Wasserleitung 160 mit Wasser gespeist. In der ersten Wasserleitung 160 ist ein elektrisch betätigbares Ventil 162 vorgesehen, das von der Steuerungseinrichtung 103 über eine erste Steuerleitung 130 steuerbar ist, um den Wasserzufluss vom Wasservorratsbehälter 106 zur Wasserelektrolyseeinrichtung 104 zu steuern.

Das in die Wasserelektrolyseeinrichtung 104 eingeleitete Wasser wird mittels der von der Stromverteilereinrichtung 114 über eine zweite elektrische Leitung 140 zugeführten elektrischen Energie in Sauerstoff und Wasserstoff gespalten. Der Wasserstoff wird durch eine erste Wasserstoffleitung 144 in einen Wasserstoffzuführvorratsbehälter 107 eingeleitet, der durch Ablassen von Wasserstoff in die von einem ersten Teil der verbleibenden Schläuche 41, 42, 43, 44 gebildeten Wasserstoffflügeltanks 154 auf einem konstanten Druck von 1,2 bar gehalten wird. Der Sauerstoff wird durch eine erste Sauerstoffleitung 145 in einen Sauerstoffzuführvorratsbehälter 107a geleitet, der durch Ablassen von Sauerstoff in die von einem zweiten Teil der verbleibenden Schläuche 41, 42, 43, 44 gebildeten Sauerstoffflügeltanks 155 auf einem konstanten Druck von 1,2 bar gehalten wird. Wenn der Druck in den Zuführtanks unter 1,2 bar sinkt, wird durch Nachpumpen von Gas aus den Flügeltanks mit einer Gaspumpe der Druck aufrechterhalten.

In der ersten Wasserstoffleitung 144 ist ein elektrisch betätigbares Ventil 146 vorgesehen, das von der Steuerungseinrichtung 103 über eine zweite Steuerleitung 132 steuerbar ist, um den Volumenstrom des durch die erste Wasserstoffleitung 144 geförderten Wasserstoffs zu regulieren und um ein Zurückströmen von Wasserstoff aus dem Wasserstoffzuführvorratsbehälter 107 in den Wasserstoffgenerator 104 zu unterbinden.

Analog wird bei der Sauerstoffleitung 145 verfahren, die dazu ein ebenfalls von der Steuerungseinrichtung 103 gesteuertes elektrisch betätigbares Ventil 147 aufweist.

Des Weiteren ist in Fig. 5 eine Brennstoffzelle 108 schematisch dargestellt, der durch eine zweite Wasserstoffleitung 180 Wasserstoff aus dem Wasserstoffzuführvorratsbehälter 107 zugeführt wird und der durch eine zweite Sauerstoffleitung 180a Sauerstoff aus dem Sauerstoffzuführvorratsbehälter 107a zugeführt wird.

Wenn ein hohes Leistungsgewicht gefordert wird, kann an Stelle der Brennstoffzelle ein bevorzugt mit Abgasturbolader und Hochdruckwasserstoffgaseinblasung ausgerüsteter Wasserstoff-Sauerstoff-Verbrennungsmotor mit einem nachgeschalteten zweiten Stromgenerator vorgesehen sein.

Auch in der zweiten Wasserstoffleitung 180 ist ein elektrisch betätigbares Ventil 182 vorgesehen, das über eine dritte Steuerleitung 133 von der Steuerungseinrichtung 103 gesteuert wird, um den Volumenstrom des Wasserstoffs durch die zweite Wasserstoffleitung 180 zu steuern. Analog wird bei der zweiten Sauerstoffleitung 180a verfahren, die dazu ein ebenfalls von der Steuerungseinrichtung 103 gesteuertes elektrisch betätigbares Ventil 181 aufweist.

Die Brennstoffzelle 108 (beziehungsweise der Wasserstoff-Sauerstoff-Verbrennungsmotor) weist eine Ansaugöffnung 184 auf, durch die Sauerstoff aus dem Sauerstoffzuführvorratsbehälter 107a eintreten kann. In der Wasserstoff-Sauerstoff-Brennstoffzelle 108 (beziehungsweise dem Wasserstoff-Sauerstoff-Verbrennungsmotor mit Stromgenerator) wird auf an sich bekannte Weise aus dem zugeführten Wasserstoff und Sauerstoff elektrische Energie erzeugt, die über eine vierte Stromleitung 186 zur Stromverteilereinrichtung 114 geleitet wird.

Das in der Brennstoffzelle 108 (beziehungsweise dem Wasserstoff-Sauerstoff-Verbrennungsmotor) bei der Rekombination von Wasserstoff und Sauerstoff entstehende Wasser wird durch eine zweite Wasserleitung 164 in den Wasservorratsbehälter 106 eingeleitet. Auch in der zweiten Wasserleitung 164 ist ein elektrisch betätigbares Ventil 166 vorgesehen, welches über eine vierte Steuerungsleitung 134 von der Steuerungseinrichtung 103 steuerbar ist.

Die Steuerungseinrichtung 103 ist über eine (in Fig. 6 unterbrochen dargestellte) fünfte Steuerungsleitung 135 mit der Stromverteilereinrichtung 114 verbunden, um die Stromverteilereinrichtung 114 und damit die Verteilung des in die Stromverteilereinrichtung 114 über die erste Stromleitung 113 und die vierte Stromleitung 186 eingeleiteten elektrischen Energie zu steuern.

Des Weiteren ist die Steuerungseinrichtung 103 über eine sechste Steuerungsleitung 136 mit dem Wasserelektrolysegerät 104 verbunden, um dieses zu steuern. Eine siebte Steuerungsleitung 137 verbindet die Steuerungseinrichtung 103 mit der Brennstoffzelle 108 (beziehungsweise dem Wasserstoff-Sauerstoff-Verbrennungsmotor mit Generator), um diese(n) zu steuern.

Wie in Fig. 6 zu erkennen ist, ist zwischen dem Wasserelektrolysegerät 104 und der Brennstoffzelle 108 (beziehungsweise dem Wasserstoff-Sauerstoff-Verbrennungsmotor) ein den Wasservorratsbehälter 106 und den Wasserstoffzuführvorratsbehälter 107 und den Sauerstoffzuführvorratsbehälter 107a einschließender geschlossener Kreislauf von Wasserstoffgas (H₂), Sauerstoffgas (O₂) und Wasser (H₂O) gebildet, wie durch die Pfeile symbolisiert ist. Durch den geschlossenen Kreislauf können keine Verunreinigungen in den Kreislauf eindringen und der Arbeitsdruck des Systems kann unabhängig von der Flughöhe konstant auf einem günstigen Wert gehalten werden.

Diese im erfindungsgemäßen Höhen-Luftfahrzeug vorgesehene photovoltaische Energieversorgungseinrichtung wird somit von außen nur durch die solare Strahlungsenergie S gespeist, wobei die gewonnene elektrische Energie zum Teil dazu genutzt wird, Pufferspeicher (Akkumulator-Energiespeicher 105 und Wasserstoffzuführvorratsbehälter 107) zu füllen, aus denen dann gespeicherte Energie abgerufen und als elektrische Energie an die Verbraucher abgegeben werden kann, wenn Spitzenlasten dies fordern oder wenn keine oder nicht ausreichend solare Strahlungsenergie S zur Verfügung steht.

Die so gewonnene elektrische Energie treibt auch die Rudermaschinen an, die in der beschriebenen Form die Querruder 13", 14" für die Rollsteuerung, das Seitenruder 20 für die Giersteuerung und das Höhenruder 21 für die Nicksteuerung betätigen.

Das Höhenluftfahrzeug wird präzise gesteuert von einer (nicht gezeigten) Steuerung, die ein Differential-GPS-System und ein Inertial-Navigationssystem sowie ein Sternen-Lageregelungssystem (Stellar Attitude Reference System) miteinander kombiniert. Bei dem Sternen-Lageregelungssystem werden automatisch optische Sternpeilungen durchgeführt und das Ergebnis wird mit einer mitgeführten digitalisierten Sternkarte verglichen. Die Messung erfolgt dabei in einer Genauigkeit von ungefähr 25 Microradian RMS. Eine derartig hohe Genauigkeit wird ermöglicht durch die große Flughöhe in der Stratosphäre, bei der die Sicht auf die Sterne nahezu nicht durch atmosphärische Störungen behindert ist. Die so von einem Sternensensor gemessene Position und der gemessene Lagewinkel werden in einem Kalman-Filter zu einem genauen Navigationsdatensatz zusammengefasst, auf den die Steuerung des Luftfahrzeugs und die Sensoren für die Lageregelung des Solargenerators 101 und/oder der Nutzlastgondeln zurückgreifen können.

Durch Hinzunahme des Sternen-Lageregelungssystems kann die Richtungsmessung durch die Sensoren im Vergleich zu einer reinen GPS-Trägheitsnavigationseinheit um das zehnfache genauer werden.

Der in den Flügeltanks gespeicherte Wasserstoff erfüllt gleichzeitig die Aufgaben eines Auftriebsgases und des Brennstoffs für die Brennstoffzelle. Alternativ kann das Fluggerät durch einen Wasserstoff-Sauerstoff-Verbrennungsmotor nach dem Dieselprinzip mit nachgeschaltetem Abgasturbolader und Hochdruckwasserstoffeinblasung betrieben werden, der ungefähr denselben Wirkungsgrad erreicht wie der Elektromotor mit der Brennstoffzelle, aber leichter baut. Dafür erzeugt der Verbrennungsmotor mehr Vibrationen als der Elektromotor, ist lauter und verbraucht mehr Energie zur Kühlung.

Das parallele Vorsehen eines photovoltaischen Solargenerators, eines Wasserelektrolysegerätes und einer Brennstoffzelle bei dieser Energieversorgungseinrichtung ermöglicht es, tagsüber, wenn ausreichend solare Strahlungsenergie zur Verfügung steht, einen Teil der vom Solargenerator erzeugten elektrischen Energie zur Erzeugung von Wasserstoff und Sauerstoff aus Wasser zu verwenden, der dann, wenn nachts keine solare Strahlungsenergie mehr zur Verfügung steht oder wenn nicht ausreichend solare Strahlungsenergie zur Verfügung steht, in der Brennstoffzelle zur Erzeugung von elektrischer Energie mittels der Brennstoffzelle mit Sauerstoff zu Wasser rekombinert wird.

Die photovoltaische Energieversorgungseinrichtung ist dazu mit der Steuerungseinrichtung 103 versehen, welche so ausgestaltet ist, dass sie bei Vorhandensein von solarer Strahlungsenergie die vom Solargenerator erzeugte elektrische Energie einem elektrischen Verbraucheranschluss der Energieversorgungseinrichtung zuführt wird und dass sie bei Nicht-Vorhandensein von solarer Strahlungsenergie oder wenn die vom Solargenerator erzeugte elektrische Energie für einen vorgegebenen Energiebedarf nicht ausreicht, die Brennstoffzelle aktiviert, um elektrische Energie an den Verbraucheranschluss zu liefern. Diese Steuerungseinrichtung sorgt somit dafür, dass die Brennstoffzelle automatisch aktiviert wird, wenn nicht ausreichend oder keine solare Strahlungsenergie zur Verfügung steht.

Die Steuerungseinrichtung 103 führt bei Vorhandensein von solarer Strahlungsenergie einen Teil der vom Solargenerator erzeugten elektrischen Energie dem Wasserelektrolysegerät zu, und sie führt dem Wasserelektrolysegerät Wasser aus dem Wasservorratsbehälter zu, so dass das Wasserelektrolysegerät aktiviert wird, um aus dem ihm zugeführten Wasser Wasserstoff und Sauerstoff zu erzeugen, der im Wasserstoff- beziehungsweise Sauerstoffzuführvorratsbehälter gespeichert wird. Dabei wird von der vom Solargenerator erzeugten elektrischen Energie stets ein Teil dazu verwendet, das Wasserelektrolysegerät zu betreiben, um den Wasserstoff zu erzeugen, der von der Brennstoffzelle zur Erzeugung von elektrischer Energie benötigt wird, wenn der Solargenerator keine oder nicht ausreichende elektrische Energie liefert. Dabei kann die Steuerungseinrichtung die Menge an elektrischer Energie, die dem Wasserelektrolysegerät zugeführt wird, oder auch die Einschaltzeiten des Wasserelektrolysegeräts in Abhängigkeit vom vorhandenen Wasserstoffvorrat steuern.

Auf diese Weise steht stets elektrische Energie zur Verfügung, die entweder direkt vom Solargenerator geliefert wird, oder indirekt über die Brennstoffzelle erzeugt wird. Einzige Eingangsenergie für dieses System ist die solare Strahlungsenergie, da Wasser, Wasserstoff und Sauerstoff einen Kreislauf bilden, der Vorratsbehälter für Wasser, für Wasserstoff und für Sauerstoff aufweist. Der geschlossene Kreislauf hat den Vorteil, dass keine Verunreinigungen den Betrieb bereinträchtigen können. Außerdem wird unabhängig von der Flughöhe immer ein konstanter Betriebsumgebungsdruck aufrechterhalten, und es muss in großer Höhe keine Kompressorarbeit für die Komprimierung der Brennstoffgase aufgebracht werden.

Ist das Luftfahrzeug mit voll beweglichen Höhenrudern 21', 21" und Seitenrudern 20', 20" versehen, die vorzugsweise am Rumpf 10 mit einem langen Leitwerkshebelarm angebracht sind, so wird die Manövrierbarkeit des ausgebildeten Luftfahrzeugs weiter verbessert. Auch diese Höhen- und Seitenruder können auf die gleiche Weise konstruiert sein wie die Tragflügel, so dass bei geringstem Gewicht eine besonders wirksame Manövrierbarkeit des Luftfahrzeugs erzielt wird.

Mit den erfindungsgemäßen Höhenluftfahrzeugen kann ein Luftfahrzeugverband im Langzeitbetrieb der fliegenden Komponenten des Verbandes, bestehend aus zumindest einem Betankungs-Höhenluftfahrzeug und zumindest einem Nutzlast tragenden Höhenflugzeug, bei Tag und Nacht und in den erforderlichen Flughöhen und Geschwindigkeiten im Dauerbetrieb fliegen.

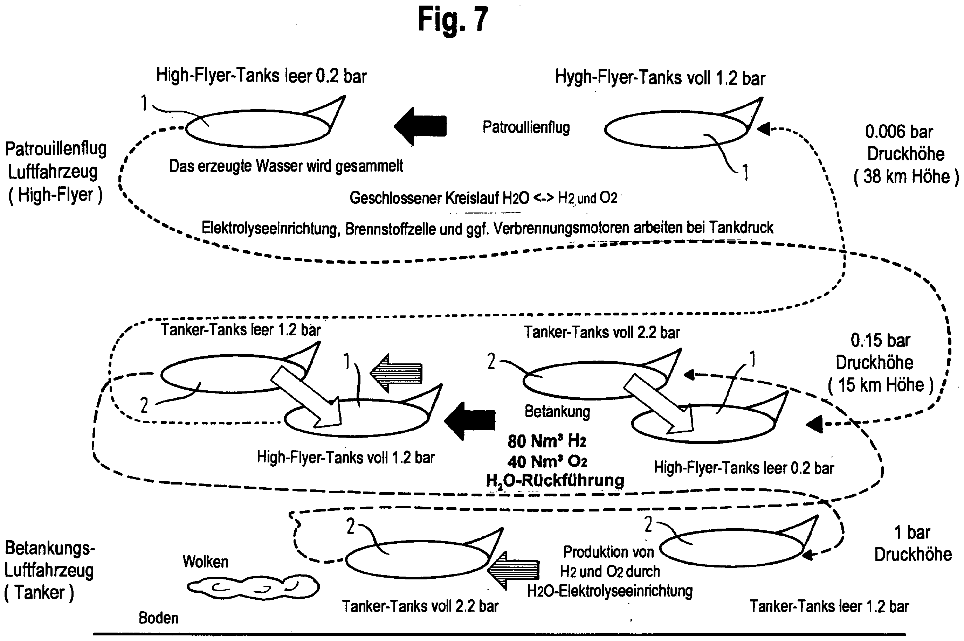

In Fig. 7 ist in schematischer Weise der Ablauf eines Betankungszyklus' beziehungsweise Betriebszyklus' in einem erfindungsgemäßen Luftfahrzeugverband, wie er in Fig. 5 gezeigt und mit Bezug auf Fig. 5 beschrieben worden ist, dargestellt. Das erste Höhenluftfahrzeug 1 ist ein Patrouillen-Luftfahrzeug, das in sehr großer Höhe, beispielsweise in der Stratosphäre, operiert und dort einen Patrouillenflug durchführt. Dieses erste Höhenluftfahrzeug wird in Fig. 7 als "High-Flyer" bezeichnet.

Ein zweites Höhenluftfahrzeug 2, das als Betankungsluftfahrzeug dient und in Fig. 7 auch als "Tanker" bezeichnet ist, operiert in niedrigeren Höhen.

Während des Patrouillenflugs verbraucht das Patrouillen-Luftfahrzeug 1 Wasserstoff und Sauerstoff zur Erzeugung von elektrischer Energie in der Brennstoffzelle und gegebenenfalls auch zur direkten Verbrennung in einem WasserstoffVerbrennungsmotor. Bei diesem Verbrauch entsteht Wasser als Abfallprodukt, das an Bord des Patrouillen-Luftfahrzeugs 1 gesammelt wird. Im vollen Zustand der Wasserstoff- und Sauerstoff-Tanks des Patrouillen-Luftfahrzeugs 1 weisen diese Tanks einen Druck von 1,2 bar auf. Im leeren Zustand der Tanks sinkt dieser Druck auf 0,2 bar. Er ist damit immer noch deutlich höher als der Umgebungsdruck von 0,006 bar, der in der Patrouillenflughöhe herrscht.

Ist der Druck in den Tanks des Patrouillen-Luftfahrzeugs 1 auf seinen unteren Schwellenwert von 0,2 bar gesunken, so ändert das Patrouillen-Luftfahrzeug 1 seine Flughöhe und sinkt auf eine niedrigere Flughöhe, bei der der Außendruck etwa 0,15 bar beträgt. Dort findet das in Verbindung mit Fig. 5 beschriebene Rendezvous zwischen dem Betankungs-Luftfahrzeug 2 und dem Patrouillen-Luftfahrzeug 1 statt, bei welchem die Tanks des Patrouillen-Luftfahrzeugs 1 wieder mit Wasserstoff und Sauerstoff auf einen Druck von 1,2 bar aufgefüllt werden. Während dieses Betankungsvorgangs wird das im Patrouillen-Luftfahrzeug gesammelte Wasser in das Betankungs-Luftfahrzeug zurückgeführt. Der Innendruck der Tanks des Betankungs-Luftfahrzeugs 2, der im vollen Zustand 2,2 bar beträgt, sinkt während des Betankungsvorgangs ab auf 1,2 bar, also auf den maximalen Fülldruck des Patrouillen-Luftfahrzeugs 1.

Nach erfolgter Betankung kehrt das Patrouillen-Luftfahrzeug auf sein ursprüngliches Höhenniveau zurück und das Betankungs-Luftfahrzeug sinkt auf eine niedrigere Höhe ab, in der beispielsweise ein Umgebungsdruck von etwa 1 bar herrscht, wobei sich diese Höhe vorzugsweise über der Wolkendecke befindet, um eine unnötige Abschattung der Solarzellen des Betankungs-Luftfahrzeugs 2 durch Wolken zu vermeiden. In dieser niedrigen Höhe wird aus dem rückgeführten Wasser durch die bordeigene Elektrolyseeinrichtung des Betankungs-Luftfahrzeugs und der aufgenommenen Solarstrahlung erneut Wasserstoff und Sauerstoff produziert und in den entsprechenden Tanks des Betankungs-Luftfahrzeugs gespeichert, bis diese einen Druck von etwa 2,2 bar aufweisen. Dann ist das Betankungs-Luftfahrzeug 2 wieder für einen Betankungs-Einsatz bereit.

Eine erste Bauform des Höhenluftfahrzeugs (High-Flyer) ist somit geeignet für Höhenflüge über 15 km und bis 38 km Flughöhe und Dauergeschwindigkeiten bis 66 m/sec über große Reichweiten. Dieses Höhenluftfahrzeug besitzt dazu eine Spannweite von 50 m, eine Flügelfläche von 250 m² und eine Solargeneratorleistung von 30 kW zur Mittagszeit. In den Flügeltanks können 80 Norm m³ Wasserstoffgas und 40 Norm m³ Sauerstoffgas mitgeführt werden. Für den Höhenflug wird aus Gewichtsgründen nur ein Bruchlastvielfaches von 2,5 eingehalten und eine sehr leichte Beplankung z.B. aus 25 µm dicker MYLAR®-Folie beziehungsweise Kevlar®-Folie verwendet, die für den Flug in dichter turbulenter Luft oder Regen nicht geeignet ist. Integriert ergeben sie ein Höhenluftfahrzeug, das in einem angestrebten Gesamtgewichtsrahmen von zum Beispiel 320 kg Fluggewicht bleibt, eine Sensornutzlast von 50 kg tragen und mit Energie versorgen kann und die erforderlichen Flugleistungen erbringt, also eine Flughöhe von bis zu 38 km und eine Dauergeschwindigkeit von bis zu 66 m/sec über Flugweiten bis zu 8500 km ohne Nachtanken in 36 h.

Eine zweite Bauform des Höhenluftfahrzeugs (Tanker) ist geeignet zum Solarenergiesammeln und für die Luft zu Luft Betankung für Flüge über 3 km und bis 21 km Flughöhe und Dauergeschwindigkeiten bis 30 m/sec in 15 km Höhe über große Reichweiten. Dieses Höhenluftfahrzeug besitzt dazu eine Spannweite von 50 m, eine Flügelfläche von 250 m² und eine Solargeneratorleistung von 30 kW zur Mittagszeit. In den Flügeltanks können 80 Norm m³ Wasserstoffgas und 40 Norm m³ Sauerstoffgas mitgeführt werden. Für den Solarenergiesammelflug in geringeren Höhen über den Wolken wird aus Stabilitätsgründen ein Bruchlastvielfaches von 6 eingehalten und eine feste Beplankung z.B. aus 50 µm dicker MYLAR®-Folie beziehungsweise Kevlar®-Folie verwendet, die für den Flug in dichter turbulenter Luft oder leichtem Regen geeignet ist. Integriert ergeben sie ein Luftfahrzeug, das in einem angestrebten Gesamtgewichtsrahmen von zum Beispiel 320 kg Fluggewicht bleibt, eine Sensornutzlast von 50 kg tragen, und sich selbst und ein Patrouillen-Luftfahrzeug (High-Flyer) mit Energie versorgen kann und die erforderlichen Flugleistungen erbringt, also eine Flughöhe von bis zu 21 km und eine Dauergeschwindigkeit von bis zu 30 m/sec über Flugweiten bis zu 3000 km ohne Nachtanken in 30 h erreicht.

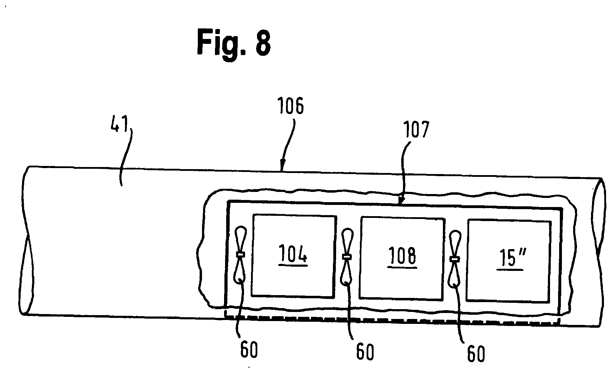

Alle Arbeitsmaschinen (z.B. die Brennstoffzelle 108, der Wasserstoffgenerator 104 und die Antriebsmotoren 15", 16", 17" der Propeller sowie andere Wärme erzeugende elektrische Verbraucher 120) müssen ausreichend gekühlt werden, was besonders in großen Höhen mit Außendrücken bis zu 0,006 bar besondere Vorkehrungen erfordert. Vorzugsweise werden der Wasserstoffgenerator 104, die Brennstoffzelle(n) 108 und die elektrischen Antriebsmotoren 15", 16", 17" wie in Fig. 8 gezeigt ist, druckdicht gekapselt in dem Wasserstoff-Zuführvorratsbehälter 107 angeordnet, der beim Tanker durch Pumpen und Gasdruckregelventile auf konstant 2,2 bar Absolutdruck und beim Höhenfluggerät auf 1,2 bar gehalten wird. Das von den Antriebsmotoren 15", 16", 17" erzeugte Drehmoment wird beispielsweise mittels Magnetkupplungen aus den druckdichten Umhüllungen nach außen zur Weiterleitung an die Propeller übertragen.

In dem Wasserstoffzuführvorratsbehälter 107 sorgen Lüfter 60 für die Kühlung der Arbeitsmaschinen. Der Wasserstoffzuführvorratsbehälter 107 ist seinerseits in einem großen Wasserstoffvorratstank (zum Beispiel den schlauchartigen röhrenförmigen Holm 41) angeordnet, der unter variablem Betriebsdruck, aber immer unter geringerem Druck als der Wasserstoffzuführvorratsbehälter 107 steht. Die Wasserstoffvorratstanks sind alle in Serie untereinander verbunden, so dass das Wasserstoffgas durch die Lüfter 60 im Kreislauf bewegt werden kann und den Wasserstoffzuführvorratsbehälter mit den darin vorgesehenen Arbeitsmaschinen kühlt.

Die Wasserstoffvorratstanks geben ihre Wärme an die Außenluft ab, die von Lüftern zum Kühlen durch die Zwischenräume 48 zwischen den die Wasserstoffbeziehungsweise Sauerstoffvorratstanks bildenden Schläuchen 40, 41, 42, 43, 44 gepumpt wird. So wird vorteilhaft die ganze Oberfläche der Wasserstoffvorratstanks als Wärmetauscher herangezogen und damit die Arbeitsmaschinenkühlung auch bei 0,006 bar Aussendruck gewährleistet.

Durch diese Anordnung wird vorteilhaft eine Kühlung aller Arbeitsmaschinen sichergestellt ohne zusätzliches Gewicht für Wärmetauscher zu benötigen.

Der jeweilige Antriebsmotor 15", 16", 17" ist über eine Magnetkupplung durch eine gasdichte Membran, die alle Tanks abschließt, mit der Propellerwelle des zugeordneten Propellers 15', 16', 17' verbunden, so dass die Gasdichtigkeit der ganzen Tankanlage voll gewährleistet ist

Zusammengefasst weisen die erfindungsgemäßen Höhenluftfahrzeuge folgende weitere Vorteile auf:
- Der bodennahe Luftraum und der Boden können durch Nutzung der Solarenergie mit praktisch unbegrenzter Flugdauer überwacht werden und
- der solargetriebene Höhenflug kann bei Tag und bei Nacht, im Sommer und im Winter mit praktisch unbegrenzter Standzeit und mit einem hohen Nutzlastanteil (z.B. 15 %) am Fluggewicht aufrecht erhalten werden.
- Das erste Höhenluftfahrzeug (Patrouillen-Luftfahrzeug) kann mit seinem großen Energievorrat und mit Solarenergie lange Strecken (bis zu 6000 km hin und zurück) in großer Höhe mit relativ hoher Dauergeschwindigkeit von bis zu 250 km/h zurücklegen ohne nachzutanken.
- Mitglieder der Gruppe mit guter Energieversorgung und geringem Eigenverbrauch können Mitglieder mit hohem Energiebedarf in der Luft mit Wasserstoffgas betanken.
- Die Patrouillen-Luftfahrzeuge können durch ihre Bauart als Radom für Sensoren und Datenlinkanlagen große leichte Antennen tragen, die den Bau solcher Anlagen mit geringem Gewicht und geringem Energieverbrauch ermöglichen.
- Die Höhenluftfahrzeuge können durch den Einsatz eines speziellen großen Propellers mit geringem Energieverbrauch fliegen, und sie können mit einem Schlaggelenk an der Rotorachse des Propellers, das aerodynamische Störmomente von der Propellerwelle fernhält, gleichzeitig sehr erschütterungsfrei fliegen, was den Einsatz langbrennweitiger Teleskopkameras an Bord ermöglicht.
- Die Höhenluftfahrzeuge können durch den Einsatz eines Laminarflügels spezieller Bauart und durch die Nutzung des statischen Auftriebs des Wasserstoffvorratsbehälters mit sehr geringem Energieverbrauch unbegrenzt lange mit Solarantrieb fliegen.

Bezugszeichen in den Ansprüchen, der Beschreibung und den Zeichnungen dienen lediglich dem besseren Verständnis der Erfindung und sollen den Schutzumfang nicht einschränken.

### Bezugszeichenliste

### Es bezeichnen:

- 1: Höhenluftfahrzeug
- 2: Betankungsflugzeug
- 10: Rumpf
- 11: Abspannmast
- 12: Rumpfnase
- 13: linker Tragflügel
- 13': Winglet
- 13": Querruder
- 14: rechter Tragflügel
- 14': Winglet
- 14": Querruder
- 15: erste, linke Antriebsgondel
- 15': Propeller
- 15": Antriebsmotor
- 16: zweite, rechte Antriebgondel
- 16': Propeller
- 16": Antriebsmotor
- 17: dritte Antriebsgondel
- 17': Propeller
- 17": Antriebsmotor
- 18: linkes oberes Abspannseil
- 18': rechtes oberes Abspannseil
- 19: linkes unteres Spannseil
- 19': rechts unteres Spannseil
- 20: Seitenleitwerk
- 20': Seitenruder
- 20": Seitenruder
- 21: Höhenleitwerk
- 21': Höhenruder
- 21": Höhenruder
- 30: Fahrwerk
- 32: Fahrwerk
- 34: Solarzellenpaneel
- 35: Solarzellenpaneel
- 36: Solarzellenpaneel
- 37: Solarzellenpaneel
- 40: Schlauch
- 41: Schlauch
- 42: Schlauch
- 43: Schlauch
- 44: Schlauch
- 45: Tragflügelbespannung
- 46: Flügelholm
- 46': Innenrohr
- 46": Außenrohr
- 46'": Klebestellen
- 47: Flügelholm
- 48: Zwischenraum
- 50: Betankungsvorrichtung
- 52: Betankungsrohr
- 54: trichterförmige Aufnahme
- 56: vorderes Betankungsrohr
- 60: Lüfter
- 101: Solargenerator
- 102: Verbraucheranschluss
- 103: Steuerungseinrichtung
- 104: Wasserstoffgenerator
- 105: Energiespeicher
- 106: Wasservorratsbehälter
- 107: Wasserstoffzuführvorratsbehälter
- 107a: Sauerstoffzuführvorratsbehälter
- 108: Brennstoffzelle
- 110: Solarzellen
- 112: Trägerelement
- 113: erste Stromleitung
- 114: Stromverteilereinrichtung
- 120: elektrischer Verbraucher
- 130: erste Steuerleitung
- 132: zweite Steuerleitung
- 134: dritte Steuerleitung
- 135: fünfte Steuerungsleitung
- 136: sechste Steuerungsleitung
- 137: siebte Steuerungsleitung
- 140: zweite Stromleitung
- 144: erste Wasserstoffleitung
- 145: Sauerstoffleitung
- 146: elektrisch betätigbares Ventil
- 147: elektrisch betätigbares Ventil
- 154: Wasserstoffflügeltanks
- 155: Sauerstoffflügeltanks
- 160: erste Wasserleitung
- 162: elektrisch betätigbares Ventil
- 164: zweite Wasserleitung
- 166: elektrisch betätigbares Ventil
- 180: zweite Wasserstoffleitung
- 180a: zweite Sauerstoffleitung
- 181: elektrisch betätigbares Ventil
- 182: elektrisch betätigbares Ventil
- 184: Ansaugöffnung
- 186: vierte Stromleitung

- Q: Sonne
- S: Strahlungsenergie
- X: Seitenleitwerksschwenkachse
- Y: Schwenkachse
- Z: Rumpfachse

## Patentansprüche

1. Unbemanntes Höhenluftfahrzeug, insbesondere Stratosphären-Luftfahrzeug, mit zumindest einem Rumpf (10), Tragflügeln (13, 14), Steuerflächen (13", 14", 20', 20", 21', 21") und zumindest einer Antriebseinrichtung (15, 16, 17), die zumindest eine Antriebsmaschine und zumindest einen Propeller (15', 16', 17') aufweist,
- wobei der jeweilige Tragflügel (13, 14) eine Mehrzahl von sich in einer Richtung quer, vorzugsweise rechtwinklig, zur Rumpflängsachse (Z) erstreckenden Flügelholmen (46', 46") und Schläuchen (40, 41, 42, 43, 44) aufweist, die von einer eine Flügelbespannung (45) bildenden Haut umgeben sind, weiche die Querschnittskontur des Tragflügels bestimmt, wobei die Querschnittskontur ein Laminarprofil bildet, das bei geringem Strömungswiderstand einen hohen Auftrieb erzeugt, und wobei zumindest ein Teil der Schläuche (40, 41, 42, 43, 44) im Tragflügel (13, 14) mit Wasserstoff befüllbar ist und dass zumindest ein Teil der Schläuche im Tragflügel (13, 14) mit Sauerstoff befüllbar ist;
- wobei der jeweilige Tragflügel (13, 14) an seinem vom Rumpf (10) abgewandten freien Ende mit einem sich quer zur Tragflügellängsachse erstreckenden Winglet (13', 14') versehen ist und
- wobei das Winglet (13', 14') mit einer bewegbaren Steuerfläche (13", 14") versehen ist, die die Erzeugung einer aerodynamischen Seitenkraft ermöglicht, um das Luftfahrzeug in eine Schrägrolllage zu bringen.

2. Unbemanntes Höhenluftfahrzeug nach Anspruch 1,
**dadurch gekennzeichnet,**
**dass** die Flügelholme (46; 47) aus einem Innenrohr (46') und einem in Längsrichtung gewellten Außenrohr (46") gebildet sind.

3. Unbemanntes Höhenluftfahrzeug nach Anspruch 1 oder 2,
**dadurch gekennzeichnet,**
**dass** das Volumenverhältnis der sauerstoffaufnehmenden Schläuche zu den wasserstoffaufnehmenden Schläuchen 1:2 ist.

4. Unbemanntes Höhenluftfahrzeug nach einem der vorhergehenden Ansprüche,
**dadurch gekennzeichnet,**
**dass** die Haut der Tragflügelbespannung (45) an der Oberseite des Tragflügels transparent ist und dass die Oberseite des Tragflügels mit Solarzellen (35, 37) versehen ist, die zwischen der transparenten Haut und den Schläuchen angeordnet sind.

5. Unbemanntes Höhenluftfahrzeug nach einem der vorhergehenden Ansprüche,
**dadurch gekennzeichnet,**
**dass** die Haut der Tragflügelbespannung (45) an der Unterseite des Tragflügels (13, 14) aus einer mit Aluminium bedampften hochfesten Aramid-Folie besteht.

6. Unbemanntes Höhenluftfahrzeug nach einem der vorhergehenden Ansprüche,
**dadurch gekennzeichnet,**
**dass** jeder Tragflügel (13, 14) mit zumindest einer Antriebsgondel (15, 16) zur Aufnahme einer Antriebseinrichtung versehen ist.

7. Unbemanntes Höhenluftfahrzeug nach einem der vorhergehenden Ansprüche,
**dadurch gekennzeichnet,**
- **dass** der Rumpf (10) mit einem sich vom Rumpf (10) nach oben und nach unten erstreckenden Abspannturm (11) versehen ist und
- **dass** Spanneinrichtungen (18, 18', 19, 19') vorgesehen sind, die die Tragflügel (13, 14), vorzugsweise deren freie Enden, und/oder die Antriebsgondeln (15, 16) gegen den Rumpf (10) und/oder den Abspannturm (11) verspannen.

8. Unbemanntes Höhenluftfahrzeug nach einem der vorhergehenden Ansprüche,
**dadurch gekennzeichnet,**
**dass** die Flügelholme (46', 46") aus einer, vorzugsweise zweigliedrigen, Gitterrohrkonstruktion aus Kohlefaserverbundwerkstoff bestehen.

9. Unbemanntes Höhenluftfahrzeug nach einem der vorhergehenden Ansprüche mit einer elektrischen Antriebsmaschine,
**dadurch gekennzeichnet,**
**dass** zur Erzeugung der Antriebsenergie eine photovoltaische Energieversorgungseinrichtung vorgesehen ist mit
- zumindest einem photovoltaischen Solargenerator (101), der auftreffende solare Strahlungsenergie (S) in elektrische Energie wandelt;
- zumindest einem Wasserelektrolysegerät (104) zur Erzeugung von Wasserstoff und Sauerstoff aus Wasser, das bei konstant gehaltenem Bodendruck arbeitet, um eine Verunreinigung der Gase durch Wasserstoffdiffusion zu vermeiden;
- zumindest einem Wasservorratsbehälter (106), der mit dem Wasserelektrolysegerät (104) über eine erste Wasserleitung (160) verbunden ist;
- zumindest einem, vorzugsweise von einem ersten Schlauch gebildeten, Wasserstoffzuführvorratsbehälter (107), der über eine erste Wasserstoffleitung (144) mit dem Wasserelektrolysegerät (104) verbunden ist;
- zumindest einem, vorzugsweise von einem zweiten Schlauch gebildeten, Sauerstoffzuführvorratsbehälter (107a), der über eine erste Sauerstoffleitung (145) mit dem Wasserelektrolysegerät (104) verbunden ist;
- zumindest einer Brennstoffzelle (108), die bei konstant gehaltenem Bodendruck in einem geschlossenen Kreislauf arbeitet, so dass Verunreinigungen der Brenngase durch Luftkohlendioxid vermieden werden können, die über eine zweite Wasserstoffleitung (180) mit dem Wasserstoffzuführvorratsbehälter (107) verbunden ist und die über eine zweite Sauerstoffleitung (180a) mit dem Sauerstoffzuführvorratsbehälter (107a) verbunden ist und die über eine zweite Wasserleitung (164) mit dem Wasservorratsbehälter (106) verbunden ist, und
- einer Steuerungseinrichtung (103), die mit dem Solargenerator (101), dem Wasserelektrolysegerät (104) und der Brennstoffzelle (108) elektrisch verbunden ist.

10. Unbemanntes Höhenluftfahrzeug nach Anspruch 9,
**dadurch gekennzeichnet,**
**dass** der Solargenerator (101) zumindest ein mit CIGS-Dünnschichtsolarzellen (110) versehenes Trägerelement (112) aufweist, das von einer dünnen Folie, vorzugsweise einer Polyimid-Folie gebildet ist.

11. Unbemanntes Höhenluftfahrzeug nach einem der Ansprüche 9 bis 10 ,
**dadurch gekennzeichnet,**
- **dass** die Steuerungseinrichtung (103) so ausgestaltet ist, dass sie bei Vorhandensein von solarer Strahlungsenergie die vom Solargenerator (101) erzeugte elektrische Energie einem elektrischen Verbraucheranschluss (102) der Energieversorgungseinrichtung zuführt und
- **dass** sie bei Nicht-Vorhandensein von solarer Strahlungsenergie oder wenn die vom Solargenerator (101) erzeugte elektrische Energie für einen vorgegebenen Energiebedarf nicht ausreicht, die Brennstoffzelle (108) aktiviert, um elektrische Energie an den Verbraucheranschluss (102) zu liefern.

12. Unbemanntes Höhenluftfahrzeug nach einem der Ansprüche 9 bis 10,
**dadurch gekennzeichnet,**
- **dass** der Steuerungseinrichtung (103) so ausgestaltet ist, dass sie bei Vorhandensein von solarer Strahlungsenergie einen Teil der vom Solargenerator (101) erzeugten elektrischen Energie dem Wasserelektrolysegerät (104) zuführt, und
- **dass** sie dem Wasserelektrolysegerät (104) Wasser aus dem Wasservorratsbehälter (106) zuführt, so dass das Wasserelektrolysegerät (104) aktiviert wird, um aus dem ihm zugeführten Wasser Wasserstoff und Sauerstoff zu erzeugen, der im Wasserstoffvorratsbehälter (107) und Sauerstoffvorratsbehälter (107a) gespeichert wird.

13. Unbemanntes Höhenluftfahrzeug nach einem der Ansprüche 9 bis 12,
**dadurch gekennzeichnet,**
**dass** der Solargenerator (101) im Inneren der zumindest an der Oberseite transparent ausgebildeten Haut des Luftfahrzeugflügels (13, 14) angeordnet ist.

14. Unbemanntes Höhenluftfahrzeug nach einem der vorhergehenden Ansprüche,
**dadurch gekennzeichnet,**
**dass** die Haut der Tragflügelbespannung (45) wetterfest, insbesondere regenfest ist, so dass das Luftfahrzeug dazu geeignet ist, auch in der Tropopause und der Troposphäre fliegen zu können.

15. Luftfahrzeugverband aus zumindest einem ersten unbemannten Höhenluftfahrzeug nach einem der Ansprüche 1 bis 13 und zumindest einem zweiten unbemannten Höhenluftfahrzeug nach Anspruch 14,
wobei das zweite Höhenluftfahrzeug (2) ein Betankungsluftfahrzeug für das erste Höhenluftfahrzeug (1) bildet.

16. Verfahren zum Betreiben eines Luftfahrzeugverbandes nach Anspruch 15,
- wobei das Betankungsluftfahrzeug mit dem ersten Luftfahrzeug während des Fluges beider Luftfahrzeuge eine Betankungsverbindung herstellt, über die vom Betankungsluftfahrzeug Wasserstoffgas an einen Wasserstoffspeicher des ersten Luftfahrzeugs und Sauerstoffgas an einen Sauerstoffspeicher des ersten Luftfahrzeugs geliefert wird und wobei vom ersten Luftfahrzeug Wasser an das Betankungsluftfahrzeug zurückgeliefert wird;
- wobei das Betankungsluftfahrzeug nach Ende des Betankungsvorgangs auf eine niedrigere Flughöhe absinkt und dort mittels der bordeigenen Wasserelektrolyseeinrichtung und aufgefangener Solarenergie aus dem aufgenommenen Wasser Wasserstoffgas und Sauerstoffgas erzeugt und diese Gase in entsprechenden bordeigenen Wasserstoffspeichern beziehungsweise Sauerstoffspeichern speichert;
- wobei das Betankungsflugzeug nach Abschluss des Gaserzeugungsprozesses wieder auf ein höheres Flugniveau aufsteigt, um einen erneuten Betankungsvorgang eines ersten Luftfahrzeugs durchführen zu können.

## Claims

1. An unmanned high-altitude aircraft, in particular a stratosphere aircraft, comprising at least one fuselage (10), wings (13, 14), control surfaces (13", 14", 20', 20", 21', 21") and at least one drive device (15, 16, 17) that has at least one drive engine and at least one propeller (15', 16', 17')
- wherein each wing (13, 14) has a plurality of wing spars (46', 46") and tubes (40, 41, 42, 43, 44) that extend transversely in one direction, preferably perpendicularly, to the longitudinal axis of the fuselage (Z) and are surrounded by a skin that forms a wing covering (45) and defines the cross-sectional contour of the wing, the cross-sectional contour forming a laminar profile that generates high uplift when there is low flow resistance, and wherein at least one portion of the tubes (40, 41, 42, 43, 44) in the wing (13, 14) can be filled with hydrogen and at least one portion of the tubes in the wing (13, 14) can be filled with oxygen;
- wherein each wing (13, 14) at its free end which faces away from the fuselage (10) is provided with a winglet (13', 14') that extends transversely to the longitudinal axis of the wing and
- wherein the winglet (13', 14') is provided with a movable control surface (13", 14") that enables an aerodynamic side force to be generated in order to bring the aircraft into an oblique bank attitude.

2. Unmanned high-altitude aircraft according to claim 1, **characterised in that** the wing spars (46, 47) are constructed of an inner tube (46') and an outer tube (46") corrugated in the longitudinal direction.

3. Unmanned high-altitude aircraft according to claim 1 or 2, **characterised in that** the volumetric ratio of the oxygen-receiving tubes to the hydrogen-receiving tubes is 1:2.

4. Unmanned high-altitude aircraft according to any one of the preceding claims, **characterised in that** the skin of the wing covering (45) on the upper side of the wing is transparent and **in that** the upper side of the wing is provided with solar cells (35, 37) arranged between the transparent skin and the tubes.

5. Unmanned high-altitude aircraft according to any one of the preceding claims, **characterised in that** the skin of the wing covering (45) on the underside of the wing (13, 14) consists of a high-strength aluminized aramid film.

6. Unmanned high-altitude aircraft according to any one of the preceding claims, **characterised in that** each wing (13, 14) is provided with at least one drive pod (15, 16) for accommodating a drive device.

7. Unmanned high-altitude aircraft according to any one of the preceding claims, **characterised in that**
- the fuselage (10) is provided with an anchoring tower (11) extending upwards and downwards from the fuselage (10) and
- tensioning devices (18, 18', 19, 19') are provided which tension the wings (13, 14), preferably their free ends, and/or the drive pods (15, 16), against the fuselage (10) and/or the anchoring tower (11).

8. Unmanned high-altitude aircraft according to any one of the preceding claims, **characterised in that** the wing spars (46', 46") comprise a grid tube construction, preferably comprising two members, consisting of carbon fibre composite.

9. Unmanned high-altitude aircraft according to any one of the preceding claims with an electric drive engine, **characterised in that** for producing the drive power a photovoltaic energy supply device is provided with
- at least one photovoltaic solar generator (101), which converts incident solar radiant energy (S) into electrical energy;
- at least one water electrolysis device (104) for generating hydrogen and oxygen from water, which works at a constantly maintained ground pressure in order to prevent contamination of the gases as a result of hydrogen diffusion;
- at least one water reservoir (106) which is connected to the water electrolysis device (104) via a first water line (160);
- at least one hydrogen supply reservoir (107), preferably constructed from a first tube, which is connected to the water electrolysis device (104) via a first hydrogen line (144);
- at least one oxygen supply reservoir (107a), preferably constructed from a second tube, which is connected via a first oxygen line (145) to the water electrolysis device (104);
- at least one fuel cell (108) which works at a constantly maintained ground pressure in a closed circulation, so that contamination of the combustion gases by carbon dioxide from the air can be prevented, said fuel cell (108) being connected via a second hydrogen line (180) to the hydrogen supply reservoir (107) and connected via a second oxygen line (180a) to the oxygen supply reservoir (107a), and connected via a second water line (164) to the water reservoir (106), and
- a control device (103) which is electrically connected to the solar generator (101), the water electrolysis device (104) and the fuel cell (108).

10. Unmanned high-altitude aircraft according to claim 9, **characterised in that** the solar generator (101) exhibits at least one carrier element (112) provided with CIGS thin-film solar cells (110) which is constructed of a thin foil, preferably a polyimide foil.

11. Unmanned high-altitude aircraft according to any one of claims 9 to 10, **characterised in that**
- the control device (103) is constructed such that in the presence of solar radiant energy it feeds electrical energy generated by means of the solar generator (101) to an electrical consumer connection (102) of the energy supply device and
- in the absence of solar radiant energy or if the electrical energy generated by the solar generator (101) is insufficient for a predetermined energy demand, said control device (103) activates the fuel cell (108) in order to supply electrical energy to the consumer connection (102).

12. Unmanned high-altitude aircraft according to any one of claims 9 to 10, **characterised in that**
- the control device (103) is constructed such that in the presence of solar radiant energy it feeds a portion of the electrical energy generated by means of the solar generator (101) to the water electrolysis device (104), and
- it feeds water from the water reservoir (106) to the water electrolysis device (104), so that the water electrolysis device (104) is activated, in order from the water fed to said water electrolysis device (104) to generate hydrogen and oxygen for storage in the hydrogen supply reservoir (107) and oxygen supply reservoir (107a).

13. Unmanned high-altitude aircraft according to any one of claims 9 to 12, **characterised in that** the solar generator (101) is arranged in the interior of the skin of the aircraft wing (13, 14), said skin being transparent, at least on the upper side.

14. Unmanned high-altitude aircraft according to any one of the preceding claims, **characterised in that** the skin of the wing covering (45) is weatherproof, in particular rainproof, so that the aircraft is suitable for flying in the tropopause and the troposphere.

15. Aircraft unit comprising at least a first unmanned high-altitude aircraft according to any one of claims 1 to 13 and at least a second unmanned high-altitude aircraft according to claim 14, wherein the second high-altitude aircraft (2) comprises a refuelling aircraft for the first high-altitude aircraft (1).

16. Method for operating an aircraft unit according to claim 15,
- wherein the refuelling aircraft makes a fuelling connection with the first aircraft during the flight of both aircraft, via which fuelling connection hydrogen gas is delivered from the refuelling aircraft to a hydrogen reservoir of the first aircraft and oxygen gas is delivered to an oxygen reservoir of the first aircraft and wherein water is delivered back to the refuelling aircraft from the first aircraft;
- wherein after the refuelling procedure has been completed the refuelling aircraft descends to a lower flight altitude and there by means of the on-board water electrolysis device and captured solar energy it generates hydrogen gas and oxygen gas from the received water and stores these gases in corresponding on-board hydrogen reservoirs and oxygen reservoirs respectively;
- wherein after the gas generation process has been completed the refuelling aircraft climbs again to a higher flight altitude in order to be able to perform a new refuelling procedure with a first aircraft.

## Revendications

1. Aéronef de haute altitude sans pilote, en particulier aéronef stratosphérique, comportant au moins un fuselage (10), des voilures (13, 14), des gouvernes (13'', 14'', 20', 20'', 21', 21'') et au moins un moyen d'entraînement (15, 16, 17), qui présente au moins un moteur d'entraînement et au moins une hélice (15', 16', 17'),
- dans lequel la voilure respective (13, 14) présente une pluralité de barres de flanc (46', 46'') s'étendant dans une direction transversale, de préférence à angle droit, par rapport à l'axe longitudinal (Z) du fuselage ainsi que des tuyaux (40, 41, 42, 43, 44) qui sont entourés d'une peau formant un entoilage d'ailes (45) qui définit le contour de la voilure en coupe transversale, ce contour en coupe transversale formant un profilé laminaire qui produit une poussée verticale élevée lorsque la résistance à l'écoulement est faible, et dans lequel au moins une partie des tuyaux (40, 41, 42, 43, 44) dans la voilure (13, 14) peut être remplie d'hydrogène et dans lequel au moins une partie des tuyaux dans la voilure (13, 14) peut être remplie d'oxygène ;
- dans lequel la voilure respective (13, 14) est munie à son extrémité libre opposée au fuselage (10) d'une ailette de bout d'aile (13', 14') qui s'étend transversalement à l'axe longitudinal de la voilure et
- dans lequel l'ailette de bout d'aile (13', 14') est munie d'une gouverne mobile (13", 14") qui permet la production d'une force latérale aérodynamique afin d'amener l'aéronef dans une condition d'inclinaison.

2. Aéronef de haute altitude sans pilote selon la revendication 1,
**caractérisé en ce que** les barres de flanc (46, 47) sont formées d'un tube intérieur (46') et d'un tube extérieur (46") ondulé dans la direction longitudinale.

3. Aéronef de haute altitude sans pilote selon la revendication 1 ou 2,
**caractérisé en ce que** le rapport volumique des tuyaux recevant l'oxygène sur les tuyaux recevant l'hydrogène est de 1 : 2.

4. Aéronef de haute altitude sans pilote selon une des revendications précédentes,
**caractérisé en ce que** la peau de l'entoilage de voilure (45) est transparente sur la face supérieure de la voilure et **en ce que** la face supérieure de la voilure est munie de cellules solaires (35, 37) qui sont disposées entre la peau transparente et les tuyaux.

5. Aéronef de haute altitude sans pilote selon une des revendications précédentes,
**caractérisé en ce que** la peau de l'entoilage de voilure (45) est composée, sur la face inférieure de la voilure (1314), d'une feuille en aramide métallisée à l'aluminium très résistante.

6. Aéronef de haute altitude sans pilote selon une des revendications précédentes,
**caractérisé en ce que** chaque voilure (13, 14) est munie d'au moins une nacelle d'entraînement (15, 16) pour recevoir un moyen d'entraînement.

7. Aéronef de haute altitude sans pilote selon une des revendications précédentes,
**caractérisé**
- **en ce que** le fuselage (10) est muni d'une tour d'ancrage (11) s'étendant depuis le fuselage (10) vers le haut et vers le bas et
- **en ce que** des moyens de serrage (18, 18', 19, 19') sont prévus pour inter-verrouiller la voilure (13, 14), de préférence ses extrémités libres, et/ou les nacelles d'entraînement (15, 16) contre le fuselage (10) et/ou la tour d'ancrage (11).

8. Aéronef de haute altitude sans pilote selon une des revendications précédentes,
**caractérisé en ce que** les barres de flanc (46', 46") sont composées d'une construction tubulaire en treillis, de préférence en deux éléments, en matériau composite en fibre de carbone.

9. Aéronef de haute altitude sans pilote selon une des revendications précédentes avec un moteur d'entraînement électrique,
**caractérisé en ce que**, pour la production de l'énergie d'entraînement, un moyen d'alimentation en énergie photovoltaïque est prévu, comportant :
- au moins un générateur solaire photovoltaïque (101), qui transforme l'énergie du rayonnement solaire rencontré (S) en énergie électrique ;
- au moins un appareil d'électrolyse d'eau (104) pour la production d'hydrogène et d'oxygène à partir de l'eau, lequel fonctionne sous une charge de pression maintenue constante pour éviter de contaminer les gaz par la diffusion de l'hydrogène ;
- au moins un réservoir d'eau (106) qui est relié à l'appareil d'électrolyse d'eau (104) par le biais d'une première ligne d'eau (160) ;
- au moins un réservoir d'alimentation en hydrogène (107), formé de préférence par un premier tuyau, qui est relié à l'appareil d'électrolyse d'eau (104) par le biais d'une première ligne d'hydrogène (144) ;
- au moins un réservoir d'alimentation en oxygène (107a), formé de préférence par un second tuyau, qui est relié à l'appareil d'électrolyse d'eau (104) par le biais d'une première ligne d'oxygène (145) ;
- au moins une pile à combustible (108), qui fonctionne en circuit fermé sous une charge de pression maintenue constante de manière à pouvoir éviter les contaminations des gaz de combustion par le gaz carbonique de l'air, et qui est reliée au réservoir d'alimentation en hydrogène (107) par le biais d'une seconde ligne d'hydrogène (180) et qui est reliée au réservoir d'alimentation en oxygène (107a) par le biais d'une seconde ligne d'oxygène (180a) et qui est reliée au réservoir d'eau (106) par le biais d'une seconde ligne d'eau (164), et
- un moyen de commande (103), qui est relié électriquement au générateur solaire (101), à l'appareil d'électrolyse d'eau (104) et à la pile à combustible (108).

10. Aéronef de haute altitude sans pilote selon la revendication 9,
**caractérisé en ce que** le générateur solaire (101) présente au moins un élément support (112) muni de cellules solaires en couches minces en CIGS (110) et qui est formé d'une mince feuille, de préférence d'une feuille en polyimide.

11. Aéronef de haute altitude sans pilote selon une des revendications 9 à 10, **caractérisé**
- **en ce que**, en présence d'énergie de rayonnement solaire, le moyen de commande (103) est configuré de manière à alimenter en énergie électrique produite par le générateur solaire (101) un branchement de consommateurs électriques (102) du moyen d'alimentation en énergie, et
- **en ce que**, en l'absence d'énergie de rayonnement solaire, ou si l'énergie électrique produite par le générateur solaire (101) ne suffit pas pour un besoin en énergie prédéterminé, il active la pile à combustible (108) pour fournir l'énergie électrique au branchement de consommateurs (102).

12. Aéronef de haute altitude sans pilote selon une des revendications 9 à 10,
**caractérisé en ce que**
- le moyen de commande (103) est configuré de telle sorte que, en présence d'énergie de rayonnement solaire, il alimente l'appareil d'électrolyse d'eau (104) avec une partie de l'énergie électrique produite par le générateur solaire (191) et
- il alimente en eau l'appareil d'électrolyse d'eau (104) à partir du réservoir d'eau (106) de telle sorte que l'appareil d'électrolyse d'eau (104) soit activé pour produire à partir de l'eau qui lui est amenée de l'oxygène et de l'hydrogène qui sont stockées dans le réservoir d'hydrogène (107) et le réservoir d'oxygène (107a).

13. Aéronef de haute altitude sans pilote selon une des revendications 9 à 12, **caractérisé en ce que** le générateur solaire (101) est disposé à l'intérieur de la peau de l'aile de l'aéronef (13, 14) formée de manière transparente au moins sur la face supérieure.

14. Aéronef de haute altitude sans pilote selon une des revendications précédentes,
**caractérisé en ce que**
la peau de l'entoilage de voilure (45) est résistante aux intempéries, en particulier résistante à la pluie, de telle sorte que l'aéronef est appropriée pour pouvoir voler également dans la tropopause et la troposphère.

15. Ensemble d'aéronefs réalisé d'au moins un premier aéronef de haute altitude sans pilote selon une des revendications 1 à 13 et d'au moins un second aéronef de haute altitude sans pilote selon la revendication 14, dans lequel le second aéronef de haute altitude (2) forme un aéronef d'approvisionnement en carburant pour le premier aéronef de haute altitude (1).

16. Procédé pour faire fonctionner un ensemble d'aéronefs selon la revendication 15,
- dans lequel l'aéronef d'approvisionnement en carburant construit avec le premier aéronef, pendant le vol des deux aéronefs, une liaison d'approvisionnement en carburant qui permet à l'aéronef d'approvisionnement en carburant de fournir l'hydrogène gazeux à un accumulateur d'hydrogène du premier aéronef et l'oxygène gazeux à un accumulateur d'oxygène du premier aéronef et dans lequel l'eau est refournie du premier aéronef vers l'aéronef d'approvisionnement en carburant ;
- dans lequel l'aéronef d'approvisionnement en carburant, après la fin du processus d'approvisionnement en carburant, descend à une hauteur de vol plus basse et y produit de l'hydrogène gazeux et de l'oxygène gazeux à l'aide du moyen d'électrolyse de l'eau à bord et de l'énergie solaire recueillie à partir de l'eau absorbée et stocke ces gaz dans des accumulateurs d'hydrogène respectivement des accumulateurs d'oxygène correspondants à bord,
- dans lequel l'avion d'approvisionnement en carburant, après la fin du processus de production de gaz, remonte à un niveau de vol plus élevé pour pouvoir réaliser un nouveau processus d'approvisionnement en carburant d'un premier aéronef.
